(19) Europäisches Patentamt / European Patent Office / Office européen des brevets

(11) **EP 3 692 387 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(21) Anmeldenummer: **18833839.6**

(22) Anmeldetag: **21.12.2018**

(51) Int Cl.:
**G01S 5/02** *(2010.01)* **G01S 13/74** *(2006.01)*
**H04W 4/02** *(2018.01)* **G07C 9/00** *(2020.01)*

(86) Internationale Anmeldenummer:
**PCT/EP2018/000585**

(87) Internationale Veröffentlichungsnummer:
**WO 2019/120612 (27.06.2019 Gazette 2019/26)**

(54) **VERFAHREN ZUR PRÜFUNG DER ZUGEHÖRIGKEIT VON FUNKKNOTEN UND VON OBJEKTEN ZU EINER FUNKUMGEBUNG**

METHOD FOR CHECKING THE ASSOCIATION OF RADIO NODES AND OF OBJECTS WITH A RADIO ENVIRONMENT

PROCÉDÉ DE VÉRIFICATION DE L'APPARTENANCE DE NOEUDS RADIO ET D'OBJETS À UN ENVIRONNEMENT RADIO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 DE 102017011879**
**26.01.2018 US 201862622689 P**

(43) Veröffentlichungstag der Anmeldung:
**12.08.2020 Patentblatt 2020/33**

(73) Patentinhaber: **Metirionic GmbH**
**01069 Dresden (DE)**

(72) Erfinder: **EGGERT, Dietmar**
**01219 Dresden (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**US-A1- 2005 228 613 US-A1- 2014 375 420**

- **ÓLAFSDÓTTIR HILDUR ET AL: "On the Security of Carrier Phase-Based Ranging", 25. August 2017 (2017-08-25), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 490 - 509, XP047446617, ISBN: 978-3-642-17318-9 [gefunden am 2017-08-25] in der Anmeldung erwähnt Chapter 2.2**

## Beschreibung

Die Erfindung betrifft ein Verfahren zur Prüfung der Zugehörigkeit von Funcknoten und von Objekten zu einer Funkumgebung mit einer Funknotenmenge von wenigstens drei zueinander beabstandeten Funkknoten

Es gibt eine Vielzahl von Verfahren zur Abstandsermittlung auf Basis der Messung von Phasen und Phasen-Differenzen von Referenz-Signalen im Frequenzbereich. Das Grundprinzip ist seit mehr als 50 Jahren bekannt, z.B. aus der US 3 243 812. Das Verfahren wird seit Jahrzehnten in Verschiedenen Applikation angewandt. Neben einer Vielzahl von Publikation gibt es auch eine ganze Reihe von Patenten.

Alternative Verfahren zur Entfernungsmessung zwischen zwei Funkknoten sind aus der DE 10 2009 060 505 B4, der DE 10 2009 060 593 A1, der DE 10 2009 060 592 B4 oder auch der DE 10 2009 060 591 A1 bekannt. Ein erweiterbares Positionsmesssystem ist aus der US 2005 / 0 228 613 A1 bekannt.

Authentifizierungsverfahren innerhalb drahtloser elektronischer Zugangssysteme nutzen typischerweise kryptologische Verfahren. Meist besitzen alle autorisierten Parteien Kenntnis über einen Schlüssel sowie über zu verwendende Authentifizierungs-Algorithmen. Zur Abwehr von Relais-Angriffen auf solche drahtlosen Zugangssysteme wurden verschiedene Konzepte entwickelt. Auf einer Abstandsbestimmung basierende Verfahren werden typischerweise als Distance-Bounding bezeichnet. Nachteilig ist, dass mittlerweile auch eine Manipulation der Abstandsbestimmung möglich ist.

Ein Distance Bounding Verfahren zur Erkennung von Relais Angriffen auf Basis von Signal-Vektormessungen ist aus A. R. S. C. Hildur Olafsdottir, "On the Security of Carrier Phase-based Ranging", https:// www.researchgate. net/ publication/254008732_Physical-layer_attacks_on_ chirp-based_ranging_ systems, Proceedings of Cryptographic Hardware and Embedded Systems (CHES) bekannt.

Aus der US 2014 / 0 375 420 A1 ist ein Verfahren zur Abwehr von Relais-Angriffen durch Vergleich unterschiedlicher Abstandsmessungen bekannt.

Vor diesem Hintergrund besteht die Aufgabe der Erfindung darin, eine Vorrichtung anzugeben, die den Stand der Technik weiterbildet.

Die Aufgabe wird durch ein Verfahren zur Prüfung der Zugehörigkeit von Funkknoten und von Objekten zu einer Funkumgebung mit den Merkmalen des Patentanspruchs 1 gelöst. Vorteilhafte Ausgestaltungen der Erfindung sind Gegenstand der Unteransprüche.

Gemäß dem Gegenstand der Erfindung wird ein Verfahren zur Prüfung der Zugehörigkeit von Funkknoten und von Objekten zu einer Funkumgebung mit einer Funknotenmenge von wenigstens drei zueinander beabstandeten Funkknoten vorgeschlagen, wobei jeder Funkknoten der Funknotenmenge jeweils eine Funkschnittstelle und einen eigenen Zeitgeber aufweist und zwischen den Zeitgebern der Funkknoten jeweils ein Zeitversatz besteht. Mindestens zwei Funkknoten der Funknotenmenge sind Referenzfunkknoten, wobei ein Abstand jedes Referenzfunkknotens zu den weiteren Referenzfunkknoten bekannt ist und die Referenzfunkknoten ein Referenzsystem mit einer Funkumgebung bilden. Mindestens ein Funkknoten der Funknotenmenge ist ein Testfunkknoten, wobei eine Zugehörigkeit des mindestens einen Testfunkknotens zu der Funkumgebung des Referenzsystems geprüft wird.

Das Verfahren umfasst einen Messprozess, einen Auswerteprozess und einen Vergleichsprozess.

Während des Messprozesses werden von Funkknoten der Funknotenmenge Signale gesendet und empfangen, wobei während des Messprozesses mindestens zwei Funkknoten der Funknotenmenge als Transceiver arbeiten und mindestens ein Funkknoten während des Messprozesses ausschließlich als Transmitter oder ausschließlich als Receiver oder als Transceiver arbeitet.

Der Auswerteprozess umfasst einen ersten Auswerteschritt und einen zweiten Auswerteschritt, wobei in dem ersten Auswerteschritt mittels empfangener Signale eine Systemübertragungsfunktion zwischen zwei Funkknoten der Funknotenmenge und/oder ein Zeitoffset zwischen den Zeitgebern von zwei Funkknoten der Funknotenmenge bestimmt wird und in dem zweiten Auswerteschritt anhand der Systemübertragungsfunktion und/oder des Zeitoffsets aus dem ersten Auswerteschritt mindestens eine Abstandsinformation eines Objekts der Funkumgebung der beiden Funkknoten zu den beiden Funkknoten bestimmt wird und/oder mindestens eine Abstandsinformation der beiden Funkknoten zueinander bestimmt wird.

In dem Auswerteprozess werden in einem ersten Durchgang der erste Auswerteschritt und der zweite Auswerteschritt für mindestens ein Paar von Referenzfunkknoten mindestens einmal durchgeführt und in einem zweiten Durchgang der erste Auswerteschritt und der zweite Auswerteschritt für einen Testfunkknoten und einen Referenzfunkknoten mindestens einmal durchgeführt werden.

In dem Vergleichsprozess wird mindestens ein Ergebnis des ersten Durchgangs mit mindestens einem Ergebnis des zweiten Durchgangs verglichen und die Zugehörigkeit des Testfunkknotens und/oder des Objekts zu der Funkumgebung des Referenzsystems wird basierend auf mindestens einem Ergebnis des Vergleichsprozesses positiv oder negativ beschieden.

Es versteht sich, dass die Abstände der Referenzfunkknoten zumindest relativ zueinander bekannt sind, während eine absolute oder zumindest relative Position des Testfunknotens nicht bekannt ist. Die Referenzfunkknoten bilden über ihre Abstandsbeziehung die Basis für ein Referenz-Koordinatensystem. Die Position des Testfunkknotens und/oder von Objekten der Umgebung ist innerhalb dieses Koordinatensystems zunächst nicht bekannt und kann mittels des Verfahrens ermittelt werden.

Es versteht sich, dass sich die Funkknoten der Funkknotenmenge abgesehen davon, dass zu jedem Referenzfunkknoten zumindest relative Abstandsinformationen vorhanden sind, nicht unterscheiden müssen. Insbesondere umfasst beispielsweise jeder Funkknoten eine Empfangseinheit, eine Sendeeinheit, einen Signalprozessor und wenigstens eine Antenne.

Umfasst ein Funkknoten mehrere Antennen, so wird das Sendesignal von einer der Antennen oder von mehreren Antennen abgestrahlt. Beispielsweise strahlen die Antennen während eines Sendezeitraums sequentiell nacheinander ab. Der Sendezeitraum ist hierfür z.B. in mehrere Zeitfenster unterteilt, wobei jeweils eine der Antennen während eines Zeitfensters sendet. Es versteht sich, dass auch der Empfang der Signale entsprechend organisiert sein kann.

Zusätzlich zu den Funksignalen, also den während des Messprozesses gesendeten bzw. empfangenen Signalen, ist ein Austausch von Datensignalen über dieselbe Schnittstelle bzw. mittels derselben Sendeeinheit und denselben Antennen möglich. Der weitere Datentransfer erfolgt dabei in demselben Frequenzbereich wie die Signale des Messprozesses oder in einem anderen Frequenzbereich. Alternativ weist jeder Funkknoten eine weitere Datenschnittstelle auf, wobei die weitere Datenschnittstelle auch drahtgebunden oder drahtlos ausgebildet ist. Der weitere Datentransfer über dieselbe oder eine andere Schnittstelle ermöglicht den Austausch von Daten, wie z.B. von ermittelten Signalvektoren, sowie die grobe zeitliche Synchronisation der Funkknoten.

Es versteht sich, dass die Funktionalität der Funkknoten während des Messprozesses unabhängig von der Zuordnung des Funkknotens zu der Gruppe der Referenzfunkknoten oder zu der Gruppe von Testfunkknoten ist. Prinzipiell ist es möglich, dass ein Testfunkknoten in einem ersten Durchlauf des erfindungsgemäßen Verfahrens als Transceiver arbeitet und in einem zweiten Durchlauf ausschließlich als Transmitter oder ausschließlich als Receiver. Entsprechendes gilt auch für die Referenzfunkknoten.

Als Transceiver werden alle Funkknoten bezeichnet, die während des Messprozesses sowohl senden als auch. Als Transmitter werden Funkknoten bezeichnet, die während des Messprozesses ausschließlich in einem Sendemodus arbeiten und zumindest ein Sendesignal senden. Dahingegen werden Funkknoten, die während des Messprozesses ausschließlich in einem Empfangsmodus arbeiten und zumindest ein Signal empfangen, als Receiver bezeichnet.

Mittels des Auswerteprozesses werden Zeitversätze zwischen den einzelnen Zeitgebern der beteiligten Funkknoten und/oder Systemübertragungsfunktionen bestimmt. Voraussetzung ist, dass eine Kohärenz zwischen den Signalen zumindest innerhalb eines Messdurchgangs gegeben ist.

In dem ersten Durchgang des Auswerteprozesses wird mindestens ein Austausch von Funksignalen innerhalb des Referenzsystems, also zwischen mindestens zwei Referenzfunkknoten ausgewertet. Es werden also mindestens von einem Referenzfunkknoten ausgesandte und von einem Referenzfunkknoten empfangene Signale zur Bestimmung der Systemübertragungsfunktion und/oder des Zeitoffsets ausgewertet. Bevorzugt wird der Auswerteschritt in dem ersten Durchgang mehrfach wiederholt und insbesondere bei jeder Wiederholung für ein anderes Paar von Referenzfunkknoten der Funkknotenmenge durchgeführt.

In dem zweiten Durchgang des Auswerteprozesses wird entsprechend ein Austausch von Funksignalen zwischen dem Testfunkknoten und einem Referenzfunkknoten, also mindestens zwei von dem Testfunkknoten gesendete und von dem Referenzfunkknoten empfangene Signale oder mindestens zwei von dem Referenzfunkknoten gesendete und von dem Testfunkknoten empfangene Signale oder mindestens zwei zwischen dem Testfunkknoten und einem Referenzfunkknoten wechselseitig ausgetauschte Signale ausgewertet.

Als Systemübertragungsfunktion wird ganz allgemein eine die Übertragungseigenschaften zwischen zwei Funkknoten beschreibende Funktion bezeichnet, also eine Funktion, welche die Übertragung eines Signals über ein Ausbreitungsmedium beschreibt.

Im Frequenzraum wird die sogenannte Transferfunktion bestimmt, welche die Übertragungseigenschaften zwischen den Funkknoten im Frequenzbereich abbildet. Vielfach wird die Transferfunktion auch verkürzt als Übertragungsfunktion bezeichnet.

Im Zeitbereich ist für das Übertragungsverhalten eines Ausbreitungsmediums auch der Begriff Kanalimpulsantwort üblich.

Es versteht sich, dass sich mittels einer Fourier-Transformation die aufgenommen Werte aus dem Frequenzbereich in den Zeitbereich transformieren lassen und vice versa.

Ergänzend wird auch ein Eigenwerteverfahren bzw. ein Signalklassifikationsverfahren angewandt.

Die in den Systemübertragungsfunktionen enthaltenen Übertragungseigenschaften umfassen sowohl den direkten Übertragungsweg zwischen zwei Funkknoten, als auch indirekte Übertragungswege, welche durch Reflexion an Objekten und/oder durch Brechung und/oder durch Beugung erzeugt werden. Auf diese Weise sind alle Objekte, welche durch Reflexion und/oder Brechung und/oder Beugung Einfluss auf den Übertragungsweg nehmen, in den Systemübertragungsfunktionen enthalten bzw. aus den Systemübertagungsfunktion extrahierbar.

Um die mehreren Übertragungswege besser auflösen zu können, ist es vorteilhaft, den Messdurchgang häufiger zu wiederholen und die Trägerfrequenz in Frequenzschritten über eine Bandbreite (vorbestimmten Frequenzbereich) zu ändern, wodurch eine größere Menge an Stützstellen im Frequenzbereich ermittelt wird.

Die Bandbreite des vorbestimmten Frequenzbereichs der Signale ist bestimmend für die Fähigkeit des Verfahrens, Signal-Pfade mit unterschiedlichen Längen aufzulösen. Wenn es sich um einen frequenzbasierten Messprozess handelt, bestimmt die Frequenzschrittweite den Bereich über den sich ein Abstand eindeutig ermitteln lässt und begrenzt gleichzeitig die Größe der eindeutig bestimmbaren Zeitversätze.

Anhand eines direkten Übertragungswegs lässt sich eine Abstandsinformation zwischen Funkknoten bestimmen. Es lässt sich in der Regel keine eindeutige Position im zwei- oder dreidimensionalen Raum angeben. Vielmehr ist nur ein mehrdeutiger Abstand ermittelbar, d.h. lediglich eine Linie oder Fläche mit gleichen Abständen oder gleichen Abstandssummen oder gleichen Abstandsdifferenzen.

Die Abstandsinformation ist daher typischerweise eine Isolinie oder Isofläche eines Abstands oder eines akkumulierten Abstands oder einer Abstandsdifferenz relativ zu einem oder zu zwei Funkknoten. In zwei Dimensionen umfasst beispielsweise ein Kreis um einen Funkknoten als Isolinie alle Punkte mit demselben Abstand. Im dreidimensionalen Raum ist die Isofläche entsprechend als Kugelfläche ausgebildet. Ist nur die Summe der Abstände von zwei Funkknoten zu einem Objekt bekannt, so lässt sich als Abstandinformation eine elliptische Isolinie bzw. ein Ellipsoid um die beiden Funkknoten ermitteln, welche alle in der Summe gleichen Abstände bzw. alle gleichen Abstandssummen zu dem Objekt umfasst. Werden Abstandsdifferenzen ermittelt, so ergeben sich als ermittelbare Isolinien bzw. Isoflächen Hyperbeln bzw. Hyperboloide.

Da Objekte durch Reflektion indirekte Übertragungswege verursachen, lässt sich aus dem entsprechenden indirekten Übertragungsweg eine Abstandsinformation, also eine Isolinie oder eine Isofläche eines Abstands oder eines akkumulierten Abstands oder einer Abstandsdifferenz der Funkknoten zu diesem Objekt ermitteln. Die aus der Analyse der Systemübertragungsfunktionen erhaltenen Informationen über die Umgebung, z.B. Anzahl und Abstände von Objekten, wird als Funkumgebung bezeichnet.

Der Vergleichsprozess umfasst mindestens einen, bevorzugt mehrere Vergleiche zwischen ermittelten Größen und stellt einen Plausibilitätstest dar.

Mittels der Analyse der indirekten Übertragungswege innerhalb des Referenzsystems wird eine Funkumgebung des Referenzsystems bzw. Eigenschaften der Funkumgebung, welche durch die Anzahl, Art und Lage von Objekten in der Umgebung bestimmt werden, erfasst. Durch Auswerten der indirekten Übertragungswege zwischen dem Testfunkknoten und den Referenzfunkknoten wird eine erweiterte Funkumgebung, also insbesondere auch die Anzahl, Art und Lage von Objekten in der Nähe des Testfunkknotens, erfasst.

Befindet sich der Testfunkknoten in der Nähe des Referenzsystems, so zeigen die ermittelten Eigenschaften der Funkumgebungen des Referenzsystem und der erweiterten Funkumgebung einen hohen Grad an Übereinstimmung. Der Testfunkknoten befindet sich dann in der gleichen Umgebung wie das Referenzsystems. Eine Abweichung zwischen den Funkumgebungen deutet darauf hin, dass sich der Testfunkknoten nicht in derselben Funkumgebung und damit nicht in ausreichender räumlicher Nähe zu dem Referenzsystem befindet.

Durch eine zusätzliche Auswertung der direkten Übertragungswege zwischen den Testfunkknoten und den Referenzfunkknoten werden Informationen über den Abstand des Testfunkknotens zu dem Referenzsystem erhalten.

Typischerweise befindet sich der Testfunkknoten an mindestens einem Signale reflektierenden Objekt, z.B. einer einen den Testfunkknoten umfassenden Schlüssel tragenden Person. Hierdurch ergeben sich zwei Möglichkeiten Informationen über den Abstand des Testfunkknotens zu dem Referenzsystem zu ermitteln. Einerseits ist eine direkte Abstandsinformation, also eine Isolinie oder Isofläche des Abstands/akkumulierten Abstands/Abstandsdifferenz des Testfunkknotens aus dem direkten Übertragungsweg einer Systemübertragungsfunktion zwischen dem Testfunkknoten und einem Funkknoten des Referenzsystems ermittelbar. Andererseits ist eine indirekte Abstandsinformation über den an dem Objekt befindlichen Testfunkknoten, also eine Isolinie oder Isofläche des Abstands oder des akkumulierten Abstands oder der Abstandsdifferenz des entsprechenden Objekts zu dem Referenzsystem aus dem durch Reflektion an diesem Objekt erzeugten indirekten Übertragungsweg der Systemübertragungsfunktion zwischen zwei Referenzfunkknoten ermittelbar. Eine Abweichung zwischen den ermittelten Abstandsinformationen deutet darauf hin, dass sich der Testfunkknoten nicht, wie vorausgesetzt, an dem Objekt befindet.

Auch ein Vergleich von bekannten Abständen zwischen Referenzfunkknoten mit aus Systemübertragungsfunktionen ermittelten entsprechenden Abständen kann als Plausibilitätstest dienen.

Es versteht sich, dass alle mit dem erfindungsgemäßen Verfahren übermittelten Werte bzw. Signalvektoren durch geeignete Verschlüsselungsmechanismen geschützt werden können, um die ablaufenden Vorgänge entsprechend zu schützen. So kann beispielsweise jeder Signalvektor mit einer zeitlich veränderlichen Zahlenfolge belegt werden, die nur den beteiligten bzw. autorisierten Funkknoten a priori bekannt ist.

Das erfindungsgemäße Verfahren ermöglicht es, einen Plausibilitätstest auf der Grundlage verschiedener Vergleiche durchzuführen. Insbesondere können ohne zusätzlichen technischen Aufwand und rein auf Basis der Signal- und Systemübertragungsfunktionsanalyse eine Vielzahl von Beziehungen zwischen den Funkknoten ermittelt werden. Damit wird eine große Datenbasis für den Plausibilitätstest erzeugt, die sowohl statische Informationen über die Umgebung sowie über die zeitliche Verfolgung der entsprechenden Ergebnisse auch dynamische Bewegungsprofile umfassen kann.

Die Erweiterung des Zeit-und Abstandsbegrenzungskonzept (Distance Bounding) durch das erfindungsgemäße Verfahren auf eine Funkumgebungs-Identifikation (Radio Environment ID) ermöglicht neuartige Sicherheitskonzepte. Das bekannte Verfahren eignet sich besonders, um Techniken, wie die Authentifizierung über Funk-Datenkommunikation mit entsprechenden kryptologischen Verfahren, die Umlaufzeitmessung mit geringer Kanalbandbreite unter Nutzung von regulären Datenrahmen auf mehreren Funk-Kanälen oder das Einbinden zusätzlicher Sensorik zu erweitern. Das Verfahren eignet sich beispielsweise als Alternative oder Ergänzung für Zugangssystems, z.B. im Automobilbereich und kann auch in einfacher Weise mit weiteren Radarsysteme, wie Abstandsradar, Park-Sensorik, Inertial Sensorik für Orientierung, Temperatur, Luftdruck etc. auf Seiten des Automobils bzw. mit Inertial-Sensorik auf Seiten des Schlüssels kombiniert werden.

Das erfindungsgemäße Verfahren ermöglicht durch das Erfassen und Analysieren der Umgebungen der beteiligten Funkknoten eine robuste und effiziente Identifizierung und Abwehr von Relais-Angriffen. Das Verfahren ist dabei einfach in etablierte Standards für die drahtlose Kommunikation, z.B. Bluetooth, Bluetooth Smart oder Zigbee, einbindbar. Außerdem ermöglicht es, die Komplexität einer Integration in weitverbreitete Lösungen zur mobilen Kommunikation, wie "Smart Phones" und Tablets zu senken.

In einer ersten Weiterbildung umfasst der Messprozess mindestens zwei Messdurchgänge, wobei in jedem Messdurchgang nacheinander von jedem Transceiver jeweils während eines Sendezeitraums ein Sendesignal mit einer Trägerfrequenz ausgesandt und das ausgesandte Sendesignal zumindest von den weiteren Transceivern während eines Empfangszeitraums empfangen wird, die Sendesignale der Transceiver zumindest während eines Messdurchgangs zueinander kohärent sind, sich die Trägerfrequenz jedes Messdurchgangs von den Trägerfrequenzen aller weiteren Messdurchgänge unterscheidet, sofern ein Funkknoten während des Messprozesses als Transmitter arbeitet der mindestens eine Transmitter jeweils während mindestens eines Zusatzsendezeitraums vor oder während oder nach einem der Messdurchgänge ein Sendsignal mit einer Trägerfrequenz aussendet, wobei das Sendesignal von den Transceivern empfangen wird.

Es versteht sich, dass, sofern vorhanden, jeder Receiver alle oder zumindest einen Teil der von den Transceivern während der mindestens zwei Messdurchgänge ausgesandten Signale empfängt.

Sofern der weitere Funkknoten während des Messprozesses auch als Transceiver arbeitet, nimmt dieser Transceiver als ein weiterer Transceiver an den mindestens zwei Messdurchgängen teil.

Sofern der weitere Funkknoten als Transmitter arbeitet, versteht es sich, dass sich der Zusatzsendezeitraum und die Sendezeiträume der Transceiver nicht überschneiden bzw. die Funkknoten nicht gleichzeitig senden. Der Zusatzsendezeitraum ist in einen oder mehrere oder alle Messdurchgänge eingegliedert, so dass der Zusatzsendezeitraum nach einem der Sendezeiträume der Transceiver und vor einem weiteren Sendezeitraum eines weiteren Transceivers liegt. Alternativ liegt der Zusatzsendezeitraum vor und/oder nach einem oder mehreren oder allen Messdurchgängen. Bevorzugt sendet der Transmitter während jedes Messdurchgangs einmal, wobei eine Trägerfrequenz des Sendesignals des Transmitters für jeden Messdurchgang einen anderen Wert annimmt. Besonders bevorzugt werden die Trägerfrequenzen der Sendesignale der Transmitter in derselben Weise geändert wie die Trägerfrequenzen der Transceiver.

Der Messdurchgang wird bevorzugt mehrfach wiederholt, wobei die Trägerfrequenz bei jeder Wiederholung innerhalb eines vorgegebenen Frequenzbereichs verändert wird. Beispielsweise wird ein sogenannter Frequenz-Sweep durchgeführt. Die Sendesignale sind bevorzugt unmoduliert.

Gemäß einer ersten Ausführungsform umfasst die Funkknotenmenge wenigstens vier Funkknoten, wobei während des Messprozesses mindestens drei Funkknoten der Funkknotenmenge als Transceiver arbeiten.

Gemäß einer zweiten Ausführungsform umfasst die Funkknotenmenge mindestens vier Funkknoten, wobei während des Messprozesses mindestens zwei Funkknoten der Funkknotenmenge ausschließlich als Transmitter oder ausschließlich als Receiver oder als Transceiver arbeiten.

Gemäß einer dritten Ausführungsform umfasst die Funkknotenmenge mindestens vier Funkknoten umfasst, wobei mindestens drei Funkknoten der Funkknotenmenge als Referenzfunkknoten das Referenzsystem bilden.

Es versteht sich, dass die drei vorgenannten Ausführungsformen auch beliebig kombinieren lassen, wobei sich die Mindestanzahl der von der Funkknotenmenge umfassten Funkknoten entsprechend erhöht.

In einer Weiterbildung wird innerhalb jedes Messdurchgangs das als zweites ausgesandte Sendesignal und jedes folgende Sendesignal zumindest aus einem Teil eines der während desselben Messdurchgangs empfangenen Signale gebildet. Hierdurch werden bereits durch die weiteren Sendesignale Informationen über vorab empfangene Sendesignale und entsprechend über vorherige Übertragungswege übermittelt. Dies ermöglicht es beispielsweise dem zuerst sendenden Transceiver anhand des empfangenen zweiten Sendesignals die Zwei-Wege-Systemübertragungsfunktion zu ermitteln. Eine weitere Möglichkeit ist, dass mit dem zweiten Signal eine Information zu dem Zeitoffset übermittelt wird, wodurch ein das zweite Signal empfangender Funkknoten aus dem empfangen Signalvektor und dem Zeitoffset eine Ein-Weg-Transferfunktion ermitteln kann.

In einer anderen Ausführungsform wird während des Messprozesses der Messdurchgang mehrfach wiederholt, wobei die Trägerfrequenz der Sendesignale für jede Wiederholung jeweils einen vorbestimmten Wert innerhalb des Frequenzbereichs annimmt und die empfangenen Signale innerhalb eines Messfrequenzbereichs bestimmt werden.

Beispielsweise wird ein Frequenz-Sweep durchgeführt, wobei die Trägerfrequenz bei jeder Wiederholung des Messdurchgangs während des Messprozesses jeweils um einen konstanten Wert innerhalb des vorgegebenen Frequenzbereichs erhöht oder verringert wird. Ein Sweep ist mit geringem Implementierungsaufwand umsetzbar. In der Regel ist es einfacher die Phasenbeziehungen über eine Vielzahl kleinerer Frequenzschritte aufrechtzuerhalten. Aufgrund von gesetzlichen Bestimmungen ist diese Ausführung jedoch für viele Anwendungen in der zulässigen Sendeleistung beschränkt.

Eine unregelmäßigere Änderung der Trägerfrequenz wird auch als Frequenz-Hopping bezeichnet. Die unterschiedlichen Frequenzen bzw. Werte für die Trägerfrequenz für jede einzelne Wiederholung sind beispielsweise in einem Lookup-Table hinterlegt oder richten sich nach einer vorgegebenen mathematischen Funktion. Beispielsweise kann das Frequenz-Hopping auf Basis von pseudorauschartigen Folgen durchgeführt werden, wodurch eine hohe Robustheit gegen Störquellen erreicht wird. Gleichzeitig erlaubt diese Ausführung des Verfahrens die Nutzung größerer Sendeleistungen bei Einhaltung der verschiedensten gesetzlichen Bestimmungen und regulatorische Vorgaben. Somit ist es möglich die Nutzung des Verfahrens auf größere Reichweiten zu erweitern.

In einer weiteren Weiterbildung weist jedes Sendesignal in dem Sendezeitraum eine Bandbreite auf, wobei die Bandbreite höchstens 1% des Messfrequenzbereichs beträgt.

Gemäß einer weiteren Ausführungsform werden in dem Auswerteprozess sowohl in dem ersten Durchgang als auch in dem zweiten Durchgang zu mehreren Objekten jeweils eine Abstandsinformation bestimmt und die Abstandsinformationen aus dem erste Durchgang jeweils mit den entsprechenden Abstandsinformationen aus dem zweiten Durchgang verglichen werden. Werden mehrere oder alle indirekten Übertragungswege ausgewertet und damit mehrere oder auch alle Objekte in der Umgebung identifiziert, so können diese für den Vergleich herangezogen werden, wodurch die Zuverlässigkeit des Plausibilitätstests erhöht wird.

In einer anderen Ausführungsform werden zumindest der Messprozess und der Auswerteprozess mehrfach wiederholt und mehrere Systemübertragungsfunktionen bestimmt, wobei anhand der Ergebnisse der mehreren ersten Durchgänge ein erstes Bewegungsprofil mindestens eines Objekts oder des Testfunkknotens und anhand der Ergebnisse der mehreren zweiten Durchgänge ein zweites Bewegungsprofil des Objekt oder des Testfunkknotens ermittelt wird und in dem Vergleichsprozess das erste Bewegungsprofil mit dem zweiten Bewegungsprofil verglichen wird. Über die Zeit können Bewegungsprofile eines oder auch mehrerer Objekte ermittelt und für Plausibilitätstest herangezogen werden.

Gemäß einer weiteren Weiterbildung wird ein erstes Bewegungsprofil des Testfunkknotens mittels eines Inertialsensors ermittelt und in dem Vergleichsprozess mit einem zweiten Bewegungsprofil verglichen, wobei das zweite Bewegungsprofil anhand der Ergebnisse mehrerer erster Durchgänge und/oder anhand der Ergebnisse mehrerer zweiter Durchgänge ermittelt wird.

Als Inertial-Sensor wird ein Sensor bezeichnet, der eine eigenständige Lageermittlung ermöglicht. Beispielsweise wird eine Orientierung mittels eines Hallsensors ermittelt, Linear- oder Rotationsbeschleunigungen sind beispielsweise mittels MEMS ermittelbar. Auch Druck- und/oder Temperaturmessung werden zur Lageermittlung eingesetzt.

Gemäß einer anderen Ausführungsform werden zumindest der Messprozess und der erste Durchgang des Auswerteprozesses mehrfach wiederholt und in dem Vergleichsprozess die Ergebnisse der mehreren ersten Durchgänge mit mindestens einem Ergebnis des zweiten Durchgangs verglichen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckung sind nicht maßstäblich und weisen, sofern nicht anders angegeben, auch keine ableitbaren geometrischen Relationen zueinander auf. Darin zeigt:

Figur 1    Referenzsystem und Testfunkknoten in einer ersten Ausführungsform,

Figur 2    Referenzsystem und Testfunkknoten in einer zweiten Ausführungsform,

Figur 3    Verkettung von Funkumgebungen im Falle eines Relais-Angriffs,

Figur 4    Formierung einer erweiterten Funkumgebungs-ID in Verbindung mit Klassifikations-und Mustererkennungsverfahren zur Identifikation und Abwehr von Relais Angriffen,

Figur 5    Überblick über die Messkonstellation,

Figur 6    zeitlicher Messablauf.

**1 Definition und Modellierung einer Funkumgebung**

Inhalt des erfindungsgemäßen Verfahrens ist es einen Testfunkknoten hinsichtlich seiner Zugehörigkeit (Präsenz) innerhalb der Funkumgebung eines Systems aus Referenzfunkknoten zu prüfen. Dazu soll das Übertragungsverhalten zwischen den Funkknoten (Testfunkknoten und Referenzfunkknoten) ermittelt und zur Ermittlung von Lagebeziehungen von Funkknoten und Objekten herangezogen werden.

Eine Funkumgebung ist ein Raum um ein System aus Referenzfunkknoten, der in seinen Eigenschaften durch physikalische (z.B. Freiraumdämpfung), bauliche (z.B. Wände) bzw. systembedingte Randbedingungen (z.B. maximale Ausgangsleistung) bestimmt ist. Die Referenzfunkknoten sind räumlich verteilt, die Abstände bzw. die Lage zueinander ist bekannt. Damit bilden die Referenzfunkknoten, über Ihre Lagebeziehungen ein Referenzsystemkoordinatensystem.

Funkknoten mit Ihren Antennen als Quellen und Senken elektromagnetischer Strahlungsenergie: Mit Hilfe Ihrer Antennen (auch Strahler) sind die Funkknoten in der Lage, elektrische Signale in elektromagnetische Wellen zu wandeln und umgekehrt die Energie einer elektromagnetischen Welle in ein elektrisches Signal zu wandeln, das dann weiterverarbeitet werden kann.

Im Sinne der weiteren Ausführungen werden die Funkknoten mit Ihren Antennen, die im Vergleich zu den Abmessungen des Raumes bzw. der Objekte klein sind, als Punktquellen und Punktsenken elektromagnetischer Energie betrachtet.

Die Funkknoten im Sinne des Verfahrens besitzen jeweils eine eigene Zeitbasis T, mit der ein Zeitgeber $Z(T)$ alle Abläufe steuert und auf deren Basis SendeSignale erzeugt und empfangene Signale bewertet werden. Im Zuge der Ausführung des Verfahrens sind die Zeit- und Frequenzoffsets zu beachten und ihre Auswirkungen zu korrigieren. Die Details dieser Korrektur sind nicht Gegenstand dieser Beschreibung. Der Vollzug dieser Korrektur wird in den weiteren Betrachtungen vorausgesetzt.

Ausbreitung elektromagnetischer Wellen: Die Ausbreitung elektromagnetischer Wellen wird von den elektrischen und magnetischen Eigenschaften der Medien bestimmt, in denen sich die Wellen ausbreiten. Elektromagnetische Wellen breiten sich von den Antennen strahlenförmig und geradlinig aus. Die Ausbreitung entlang eines Weges kann durch ein lineares zeitinvariantes System mit einer Übertragungsfunktion $H(j\omega) = a \cdot e^{-j\omega\frac{d}{c}}$ abgebildet werden.

Ein Weg wird über den Amplitudengang $a = e^{-\alpha d}$ (erster Term) und den Phasengang $-j\omega\frac{d_i}{c}$ gekennzeichnet. $\alpha$ beschreibt einen Dämpfungskoeffizienten und d die elektrische Länge des Pfades zwischen den Antennen. Der Phasengang wird maßgeblich durch den Quotienten d bestimmt. Dieser wird auch als Gruppenlaufzeit $t_g$ bezeichnet, wobei c die Lichtgeschwindigkeit ist. Der Term $e^{-\omega t_g}$ beschreibt die Verzögerung einer Welle um $t_g$ im Frequenzbereich.

In einer Funkumgebung ist die Ausbreitung in der Luft von besonderem Interesse, wobei die Wellen an Grenzflächen reflektiert, gebrochen, gebeugt und gestreut werden können, wobei als Grenzflächen, die Übergänge zu Körpern mit von Luft verschiedenen Ausbreitungseigenschaften zu verstehen sind, die nachfolgend auch als Objekte bezeichnet werden sollen.

Objekte sind somit Körper mit von Luft unterschiedlichen elektrischen Materialeigenschaften, die einfallende elektromagnetische Wellen im Wesentlichen reflektieren, aber auch durch Beugung, Streuung oder Brechung das Ausbreitungsverhalten beeinflussen. Objekte sind weder in der Lage elektromagnetische Wellen zu erzeugen noch können Sie elektromagnetische Energie in elektrische Signal verwandeln.

Es sei angemerkt, dass es an Grenzflächen zu Phasensprüngen kommen kann. Darüber hinaus beeinflusst das Durchlaufen eines Körpers bzw. Objekts die Ausbreitungsrichtung durch Brechung sowie die Ausbreitungsgeschwindigkeit einer Welle. Im Sinne der weiteren Betrachtungen wird auf diese Effekte nicht weiter eingegangen, da sie die gewählten Modelle komplexer gestalten würden, ohne die Gesamtaussage grundsätzlich zu verändern.

Grundsätzlich unterscheidet man hinsichtlich der Ausbreitung von Strahlung zwischen zwei Punkten zwischen der Ausbreitung entlang des direkten Wegs und der Ausbreitung entlang indirekter über Reflexionen an Objekten verlaufender Wege. In den weiteren Darstellungen wird die Ausbreitung einer Welle durch einen Strahl dargestellt und damit die Reflexionsstelle (des Strahles) auf einen Punkt auf der Oberfläche des Objektes reduziert. Zur Übersichtlichkeit der Darstellung werden die Objekte auf die punktförmige Reflexionsstelle reduziert, wobei damit implizit ein Einhalten der Stetigkeitsbedingungen an den Grenzflächen eingeschlossen wird.

Indirekte Pfade sind länger als der direkte Pfad; die elektromagnetische Welle wird mit Hilfe einer Antenne erzeugt und breitet sich über eine Reflexionsstelle indirekt zur Empfangsantenne aus, wo ein Teil der Energie in ein elektrisches Signal umgewandelt wird.

An der Empfangsantenne entsteht die Feldverteilung als Überlagerung der Energie, die sich über jeden Pfad ausbreitet. Bei $n$ Ausbreitungswegen ergibt sich die Kanalübertragungsfunktion als Überlagerung der Kanalübertragungsfunktionen der einzelnen Ausbreitungswege $H(j\omega) = \sum_{i=1}^{n} a_i \cdot e^{-j\omega\frac{d_i}{c}}$. Betrachtet man jetzt die entsprechende Transformation der Kanaltransferfunktion $H(j\omega)$ in den Zeitbereich, so entsteht die Kanalimpulsantwort:

$$h(t) = \mathbb{F}^{-1}\{H(j\omega)\}$$

$$h(t) = \sum_{i=1}^{n} a_i \cdot \delta(t - t_{g,i})$$

Daraus ist ersichtlich, dass sich die einzelnen Signalpfade, gedämpft mit dem Faktor $\alpha_i$, als Einzelimpulse $\delta(t)$ in die Kanalimpulsantwort abbilden, die jeweils um die Gruppenlaufzeit $t_{g,i}$ verzögert sind.

Mit den vorgestellten Eigenschaften kann eine Funkumgebung im Sinne der Übertragungseigenschaften durch eine räumliche Verteilung von Funkknoten und Objekten im Raum modelliert werden, wobei:

- das Übertragungsverhalten zwischen den Antennen der Funkknoten durch ein lineares, zeitinvariantes System von Ausbreitungspfaden bestimmt ist,
- die Ausbreitungspfade als Strahlen dargestellt werden, deren Übertragungsfunktion durch die Ausbreitungsgeschwindigkeit und die Länge des Pfades bestimmt ist,
- Funkknoten mit Ihren Antennen auf Punkte in einem Koordinatensystem reduziert werden, wobei die Antennen als Quellen und Senken elektromagnetischer Energie arbeiten und deren Speise- bzw. Empfangssignale die Eingangs-, wie auch die Ausgangsgrößen des linearen zeitinvarianten Übertragungssystems bilden.
- Objekte auf Punkte in einem Koordinatensystem reduziert werden und dabei jeweils die Orte der Reflexion des entsprechenden Ausbreitungsstrahls bzw. Weges abbildet.

Im Sinne des Verfahren wird ein Messprozess vorausgesetzt, bei dem innerhalb einer Umgebung mit Funkknoten und Objekten durch Nutzung der Funkknoten die entsprechenden Eingangssignale erzeugt und die entsprechenden Ausgangssignale für eine weitere Verarbeitung bereitgestellt werden können. Dieser Messprozess kann in der Zeitdomain wie auch der Frequenzdomain arbeiten. In der Zeit-Domain wird die Basis zur Gewinnung von Kanalimpulsantworten geschaffen, vorzugsweise unter Nutzung impulsartiger Signalformen. In der Frequenzdomain wird vorzugsweise durch Verwendung von Rampenfrequenzsignalen die Basis für die Gewinnung von Kanaltransferfunktionen geschaffen. Nach dem Messprozess erfolgt die Ableitung der Systemübertragungsfunktionen $M_{ij} = F(H_{ij}(j\omega); T_{offset,ij}, f_{offset,ij})$ im Frequenzbereich bzw. der äquivalenten Darstellung im Zeitbereich $m_{ij} = f(h_{ij}(t); T_{offset,ij}, f_{offset,ij})$ mit den entsprechenden Kanalimpulsantworten $h_{ij}(t)$ bzw. Kanaltransferfunktionen $H_{ij}(j\omega)$ in einem ersten Auswerteschritt. Die Kanalimpulsantworten bzw. Kanaltransferfunktionen beschreiben das Ausbreitungsverhalten einer elektromagnetischen Welle von der Position $P_j(x_j,y_j,z_j)$ des Funkknoten $j$, wo sie von einer punktförmige Quelle erzeugt wird, zu der Position $P_i(x_i,y_i,z_i)$ des Funkknoten $i$, wo Energie dieser elektromagnetischen Welle von der Antenne (punktförmige Energie-Senke) des Funkknotens i in eine elektrisches Signal gewandelt und von dem Funkknoten weiterverarbeitet wird. Die entsprechenden Zeitoffset ergeben sich aus Offset zwischen den Zeitbasen $T_i$ und sind bestimmt durch $T_{offset,ij} = T_i - T_j$. Dabei gilt $T_{ij} = -T_{ji}$.

Im Sinne der weiteren Betrachtungen seien zunächst der Messprozess und der erste Auswerteschritt abgeschlossen und die Systemübertragungsfunktion bzgl. der beteiligten Funkknoten liegt vor. Mittels bekannter Verfahren wurden die Anzahl und Länge der Pfade bzw. akkumulierten Pfade bzw. Differenzpfade ermittelt. Eine Auswertemöglichkeit nutzt die Repräsentation der Systemübertragungsfunktion im Zeitbereich - die Kanalimpulsantwort- in der die Pfade als Dirac-Impulse, die mit den Signalverzögerungen in der Zeit verschoben sind, direkt ableitbar sind. Wurde der Messprozess im Frequenzbereich durchgeführt, so ist die äquivalente Darstellung im Zeitbereich zunächst zu ermitteln.

## 2 Ableitung von Lageinformationen aus Abstands-informationen

In der Folge soll auf die Ableitung von Lageinformationen auf Basis der vorab beschriebenen Funktionen bzw. ermittelten Pfade eingegangen werden.

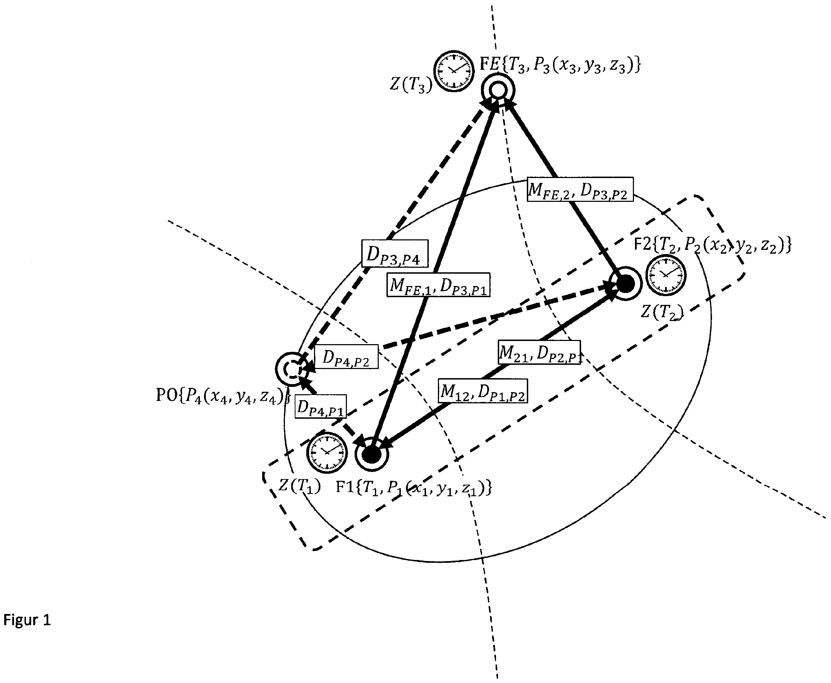

Figur 1 stellt eine entsprechende Minimalkonfiguration aus einer Funkknotenmenge von drei Funkknoten F1, F2 FE und einem Objekt PO in zwei Dimensionen dar. Eine Auslegung des Verfahrens im Raum ist ausdrücklich Teil des Verfahrens. Die Darstellung wurde im Sinne der Übersichtlichkeit auf eine flächenhafte Abbildung reduziert. Die Funkknoten F1 und F2 arbeiten als Transceiver. Der Funkknoten FE als weiterer Funkknoten arbeitet während des Messprozesses in einem von drei verschiedenen Betriebsmodi. In Modus 1 arbeitet der weitere, hier dritte Funkknoten FE wie die Transceiver F1 und F2 als Transceiver. In Modus 2 arbeitet der weitere Funkknoten FE ausschließlich als Sender bzw. Transmitter und in Modus 3 ausschließlich als Empfänger bzw. Receiver. Für alle Funkknoten gilt, dass der Sendebetrieb nur in zugeordneten Zeitbereichen stattfindet und zwei Funkknoten der Funkknotenmenge nicht gleichzeitig senden.

Die vier Einheiten (drei Funkknoten und ein Objekt) sind als Doppelkreise dargestellt, wobei der innere Kreis die Unterschiede symbolisieren soll. Ein gestrichelter innerer Kreis steht für ein Objekt. Ein schwarz ausgefüllter innerer Kreis steht für einen Funkknoten F1 bzw. F2 der ausschließlich als Transceiver arbeitet. Ein nicht ausgefüllter innerer Kreis steht für den weiteren Funkknoten FE der in einem von drei verschieden Modi arbeitet.

Für zwei der Funkknoten der Funkknotenmenge ist der Abstand zueinander bekannt. Diese Funkknoten sind Referenzfunkknoten und bilden ein Referenzsystem. Sie befinden sich an verschiedenen Positionen im Raum. Damit bilden sie die Basis für die Einführung eines Referenzkoordinatensystems, dass in seiner Dimension von der Anzahl der Referenzfunkknoten mit verschiedenen Positionen im Raum bestimmt wird und erlauben die Ableitung von Lagebeziehungen.

Entsprechend der vorgestellten Annahmen werden die Einheiten auf Punkte im Raum $P_i(x_i, y_i, z_i)$ reduziert; diese befinden sich im Mittelpunkt der zugehörigen Kreise. Die Ausbreitungswege werden durch Strahlen dargestellt, die in den zu den Einheiten gehörenden Punkten beginnen und enden. Durchgängige Strahlen kennzeichnen direkte Ausbreitungswege zwischen Funkknoten. Gestrichelt dargestellte Strahlen kennzeichnen Ausbreitungswege, die zu einem Objekt gehen bzw. von einem Objekt kommen. Die elektromagnetische Welle wird an dem Objekt reflektiert, um dann von den im Empfangsmode befindlichen Funkknoten verarbeitet zu werden. Strahlen mit zwei Pfeilen zeigen an, dass der Ausbreitungspfad in beiden Richtungen durchlaufen wird. Strahlen mit nur einem Pfeil zeigen an, dass der Ausbreitungspfad nur in einer Richtung durchlaufen wird. Aus den vielen möglichen Konfigurationen sollen 3 herausgenommen werden.

### 2.1 Konfiguration: Referenzknoten: FE, F2 Testknoten: F1

In der ersten Konfiguration arbeitet der weitere Funkknoten FE ausschließlich in einem Empfangsmodus. Referenzfunkknoten sind der weitere Funkknoten FE und der zweite Transceiver F2, deren Positionen bzw. Abstände bekannt sind. Testfunkknoten ist der als Transceiver arbeitende Funkknoten F1. In dieser Konfiguration können alle Zeitoffsets zwischen den Funkknoten ermittelt und damit die vier Systemübertragungsfunktionen $M_{12}, M_{21}, M_{FE,1}, M_{FE,2}$ im Frequenzbereich bzw. $m_{12}, m_{21}, m_{FE,1}, m_{FE,2}$ im Zeitbereich ermittelt werden.

Da die Funkknoten zu Punkten reduziert wurden, erfolgt an den FK keine Reflexion. Damit enthält jede der genannten Systemübertragungsfunktionen die Informationen über zwei Ausbreitungswege $W_1$, und $W_2$, wobei $W_1$ der direkte Weg mit der Länge $D(W_1)$ zwischen den Funkknoten ist und $W_2$ der indirekte Weg mit der Länge $D(W_2)$ zwischen den jeweiligen Funkknoten über eine Reflexion am Objekt im Punkt $P_4$ ist.

$M_{FE,1}$:

$$M_{FE,1:W1}\left(H_{FE,1:W1}(j\omega); T_{off:FE,1}\right) \ mit \ W_1 : P_1 \rightarrow P_3$$
$$\rightarrow D_{FE,1}(W_1) = D_{P3,P1}$$

$$M_{FE,1:W2}\left(H_{FE,1:W2}(j\omega); T_{off:FE,1}\right) \ mit \ W_2 : P_1 \rightarrow P_4 \rightarrow P_3$$
$$\rightarrow D_{FE,1}(W_2) = D_{P4,P1} + D_{P3,P4}$$

$M_{21}$:

$$M_{21:W1}\left(H_{21:W1}(j\omega); T_{off:21}\right) \ mit \ W_1 : P_1 \rightarrow P_2$$
$$\rightarrow D_{21}(W_1) = D_{P2,P1}$$

$$M_{21:W2}\left(H_{21:W2}(j\omega); T_{off:21}\right) \ mit \ W_2 : P_1 \rightarrow P_4 \rightarrow P_2$$
$$\rightarrow D_{21}(W_2) = D_{P4P1} + D_{P2P4}$$

$M_{FE,2}$:

$$M_{FE,2:W1}\bigl(H_{FE,2:W1}(j\omega); T_{off:FE,2}\bigr) \; mit \; W_1: P_2 \rightarrow P_3$$
$$\rightarrow D_{FE,2}(W_1) = D_{P3,P2}$$

$$M_{FE,2:W2}\bigl(H_{FE,2:W2}(j\omega); T_{off:FE,2}\bigr) \; mit \; W_2: P_2 \rightarrow P_4 \rightarrow P_3$$
$$\rightarrow D_{FE,2}(W_2) = D_{P4,P2} + D_{P3,P4}$$

$M_{12}$:

$$M_{12:W1}\bigl(H_{12:W1}(j\omega); T_{off:12}\bigr) \; mit \; W_1: P_2 \rightarrow P_1$$
$$\rightarrow D_{12}(W_1) = D_{P1,P2}$$

$$M_{12:W2}\bigl(H_{12:W2}(j\omega); T_{off:12}\bigr) \; mit \; W_2: P_2 \rightarrow P_4 \rightarrow P_1$$
$$\rightarrow D_{12}(W_2) = D_{P4P1} + D_{P2P4}$$

Mit Hilfe der aus den direkten Pfaden ermittelten Abstände $D_{P1,P2}$ und $D_{P1,P3}$ ergeben sich zwei Kreise um die Positionen $P_2$ bzw. $P_3$ mit den Radien $D_{P1,P2}$ bzw. $D_{P1,P3}$. Die Position des Testfunkknotens befindet sich an den Schnittpunkten dieser beiden Kreise. Da es zwei Schnittpunkte gibt, ist die Positionsermittlung für den Testknoten in dieser Konfiguration nicht eindeutig.

Die Position des Objekts lässt sich über die indirekten Wege $D_{ij}(W_2)$ bestimmen. Die Länge der entsprechenden indirekten Pfade bildet die Schenkellängensumme von zwei Schenkeln eines Dreiecks, die jeweils in der Position der beiden beteiligten Funkknoten beginnen und in einem gemeinsamen Punkt enden, und eine Ellipse (in 3D eines Ellipsoids) ergeben, auf deren Rand (in 3D Oberfläche) das Objekt sich befindet. Die Positionsbestimmung des Objektes ist daher nur bezüglich einer Iso-Linie (in 3D eine Iso-Fläche) möglich die die Form einer Ellipse besitzt. Werden nur die Referenzknoten für die Lagebestimmung des Objektes benutzt, so kann nur für eine Ellipse parametrisiert werden und damit zur Lagebestimmung genutzt werden. Die Ellipse besitzt ihre Brennpunkte in den Positionen $P_2$ und $P_3$ der Referenzfunkknoten, wobei die Summe der beiden Schenkel des Dreiecks die Länge $D_{FE,1}(W_2) = D_{P4,P2} + D_{P3,P4}$ besitzt. Diese Ellipse ist nicht innerhalb der Figur 1 dargestellt.

Werden auch noch die unter Einbeziehung des Testknoten gefundenen Ergebnisse zur Lagebestimmung genutzt, so können die Parameter für drei Ellipsen mit unterschiedlichen Brennpunkten bestimmt werden. Das Objekt befindet sich im Schnittpunkt der drei Ellipsen:

1. Ellipse: Brennpunkte: $P_1$ und $P_2$, Schenkelsumme des Dreiecks $D_{2,1}(W_2) = D_{P4,P1} + D_{P2,P4}$
2. Ellipse: Brennpunkte: $P_1$ und P$_3$, Schenkelsumme des Dreiecks $D_{3,1}(W_2) = D_{P4,P1} + D_{P3,P4}$
3. Ellipse: Brennpunkte: $P_2$ und $P_3$, Schenkelsumme des Dreiecks $D_{3,2}(W_2) = D_{P4,P2} + D_{P3,P4}$

## 2.2 Konfiguration: Referenzknoten: F1, F2 Testknoten: FE

In der zweiten vorgestellten Konfiguration ist der weitere Funkknoten FE der Testknoten und arbeitet ausschließlich im Empfangsmode. Die Transceiver F1 und F2 sind die Referenzknoten, die das Referenzsystem ausbilden. Die Position der Funkknoten F1 und F2 ist damit bekannt. In dieser Konfiguration können nicht alle Zeitoffsets zwischen den Funkknoten ermittelt und damit nur die zwei Systemübertragungsfunktionen $M_{12}, M_{21}$ im Frequenzbereich bzw. $m_{12}, m_{21}$ im Zeitbereich vollständig ermittelt werden.

Die Systemübertragungsfunktionen enthalten wieder die Informationen über zwei Ausbreitungswege $W_1$ und $W_2$, wobei $W_1$ der direkte Weg mit der Länge $D(W_1)$ zwischen den Funkknoten ist und $W_2$ der indirekte Weg mit der Länge $D(W_2)$ zwischen den jeweiligen Funkknoten über eine Reflexion am Objekt im Punkt $P_4$.

$M_{21}$:

$$M_{21:W1}\big(H_{21:W1}(j\omega); T_{off:21}\big) \; mit \; W_1: P_1 \to P_2$$
$$\to D_{21}(W_1) = D_{P2,P1}$$

$$M_{21:W2}\big(H_{21:W2}(j\omega); T_{off:21}\big) \; mit \; W_2: P_1 \to P_4 \to P_2$$
$$\to D_{21}(W_2) = D_{P4P1} + D_{P2P4}$$

$M_{12}$:

$$M_{12:W1}\big(H_{12:W1}(j\omega); T_{off:12}\big) \; mit \; W_1: P_2 \to P_1$$
$$\to D_{12}(W_1) = D_{P1,P2}$$

$$M_{12:W2}\big(H_{12:W2}(j\omega); T_{off:12}\big) \; mit \; W_2: P_2 \to P_4 \to P_1$$
$$\to D_{12}(W_2) = D_{P4P1} + D_{P2P4}$$

Da der Abstand zwischen den Funkknoten F1 und F2 bekannt ist, kann das Ergebnis nur zur Überprüfung der Messung herangezogen werden. Mit diesen Funktionen lassen sich direkt keine weiteren Lagebeziehungen für den Testfunkknoten erzeugen.

Da beide Funktionen aufgrund des reziproken Kanalverhaltens zueinander in einer engen Beziehung stehen, sind die extrahierbaren Information bezüglich des indirekten Wegs $W_2$ äquivalent. Somit kann aus den Ergebnissen nur die Lageinformation bezüglich einer Ellipse extrahiert werden und zwar: Brennpunkte der Ellipse: $P_1$ und $P_2$; Schenkelsumme des Dreiecks $D_{2,1}(W_2) = D_{P4,P1} + D_{P2,P4}$. Die Lage dieser Ellipse ist in Figur 1 dargestellt.

Es lässt sich zeigen, dass statt der Systemübertragungsfunktionen $M_{FE,2}, M_{FE,1}$ im Frequenzbereich bzw. $m_{FE,2}, m_{FE,1}$ im Zeitbereich unter zu Hilfenahme des ermittelten Zeitoffset $T_{offset,21} = -T_{ottset,12}$ die Abstands-Differenztransferfunktion $H_{\Delta(FE,1;FE,2)}(j\omega)$ bzw. ihre äquivalente Funktion $h_{\Delta(FE,1;FE,2)}(j\omega)$ im Zeitbereich ermittelt werden kann. Die Bestandteile dieser Funktion enthalten die Unterschiede der Verzögerungen von elektromagnetischen Wellen, die sich vom F1 zum Knoten FE ausbreiten bezüglich bzw. relative zu den Verzögerungen von elektromagnetischen Wellen, die sich von F2 zum Knoten FE ausbreiten. Die extrahierbaren Verzögerungen dieser Funktion führen zu Abstandsdifferenzen. $\Delta D(FE,1; FE, 2) = D_{P3,P1} - D_{P3,P2}$. Mit dieser extrahierten Abstandsdifferenz ist bezügliche der Lageinformation des Funkknotens FE eine Hyperbel in der Fläche (bzw. eine Hyperboloid in 3D) bestimmbar. Die Parameter dieser Hyperbel sind: Brennpunkte: $P_1$ und $P_2$ Abstandsdifferenz der Schenkelsumme des Dreiecks, die in jeweils in den Brennpunkten beginnen und auf der Hyperbel in einem Punkt enden $AD(FE, 1; FE, 2) = D_{P3,P1} - D_{P3,P2}$. Diese Hyperbel ist in Figur 1 dargestellt.

In dieser Konfiguration ist die Lage des Testknotens entlang einer Hyperbel Funktion im Raum und die Lage des Objekts auf dem Rand einer Ellipse im Raum beschränkt. Hinsichtlich der Zugehörigkeit ist insbesondere die Hyperbel eine Herausforderung, da der Raum möglicher Positionen auch Positionen mit großen absoluten Abständen enthält.

Es lässt sich zeigen, dass auch die (zu dieser Konfiguration aus Sicht des Testfunkknotens) komplementäre Arbeitsweise des Testfunkknotens, bei der der Testfunkknoten während eines Intervalls ausschließlich sendet und ansonsten keine Signale empfängt, bezüglich des Testfunkknotens nur zu einer parametrisierten Hyperbel als Lage-Information führt.

### 2.3 Konfiguration: Alle Funkknoten arbeiten als Transceiver

Es versteht sich, dass die Konfiguration bei der alle drei Funkknoten F1, F2, FE als Transceiver arbeiten, die größte Menge an verwertbaren Empfangssignalen liefert. Das Messregime baut auf die Ermittlung von drei Systemübertragungsfunktionen auf, wobei der Abstand zwischen den FK ermittelt werden kann; da der Abstand zwischen den beiden Referenzfunkknoten bereits bekannt ist, kann durch Vergleich mit dem Messergebnis eine Überprüfung der Messung erfolgen. Mit zwei Abstandsmessungen ist bereits eine Positionsermittlung des Testfunkknotens in der Ebene möglich, wobei zwei Positionen die entsprechenden Abstandsbedingungen erfüllen. Die Positionsbestimmung ist also doppeldeutig.

Die Position des Objekts kann über die indirekten Wege bestimmt werden. Die Länge der entsprechenden indirekten Pfade bildet die Abstands- oder Längensumme der beiden Schenkel eines Dreiecks, die jeweils in der Position der beiden beteiligten FK beginnen und in einem gemeinsamen Punkt enden, und eine Ellipse (in 3D eines Ellipsoids) ergeben, auf deren Rand sich das Objekt befindet. Die Positionsbestimmung des Objektes ist daher nur bezüglich einer Iso-Linie möglich, die die Form einer Ellipse besitzt. Werden nur die Referenzknoten für die Lagebestimmung des Objektes benutzt, so kann nur eine Ellipse parametrisiert und damit zur Lagebestimmung genutzt werden. Werden auch noch die Messergebnisse, die unter Einbeziehung des Testknoten entstanden sind, zur Lagebestimmung genutzt, so können die Parameter für drei Ellipsen mit unterschiedlichen Fokuspunkten bestimmt werden. Das Objekt befindet sich im Schnittpunkt der drei Ellipsen.

### 2.4 Schlussfolgerungen

Die Struktur eines Systems basierend auf Funkknoten, die als Transceiver arbeiten und Funkknoten, die ausschließlich in einem Sendemodus oder einem Empfangsmodus arbeiten, ermöglicht eine Vielzahl von Varianten, was eine Vorhersage des Systemverhaltens erschwert.

Die kleinste Konfiguration mit einer Beschränkung auf drei Funkknoten erlaubt zum Teil nur eine beschränkte Extraktion von Lage Informationen. Damit erscheint es als sinnvoll, die Anzahl Funkknoten des Referenzsystems zu erhöhen, um die Zuverlässigkeit der extrahierten Lageinformationen zu erhöhen.

Es gibt jedoch eine Vielzahl von Applikationen, die die Beweglichkeit und den Zugang zu bestimmten Räumen auf andere Weise z.B. durch Mauern einschränken. In solchen Fällen können auch Systeme mit nur zwei Referenzfunkknoten zuverlässige Aussagen bzgl. der Lage des Testknotens liefern und eine Identifikation von Objekten unterstützen.

## 3 Beschreibung eines Referenzknotensystems zur Ermittlung von Ausbreitungseigenschaften

### 3.1 Merkmalserkennung für Referenzfunkknotensystems und qualifizierte Testfunkknoten

Nachdem zunächst die Möglichkeiten zur Extraktion von Lageinformationen von Funkknoten und Objekten mit Hilfe von Systemtransferfunktionen dargestellt wurden, soll nun ein Verfahrensbeispiel im Zusammenhang mit der Identifikation und Abwehr von Relais-Angriffen auf Challenge-Response Authentifizierungsverfahren beispielhaft erläutert werden.

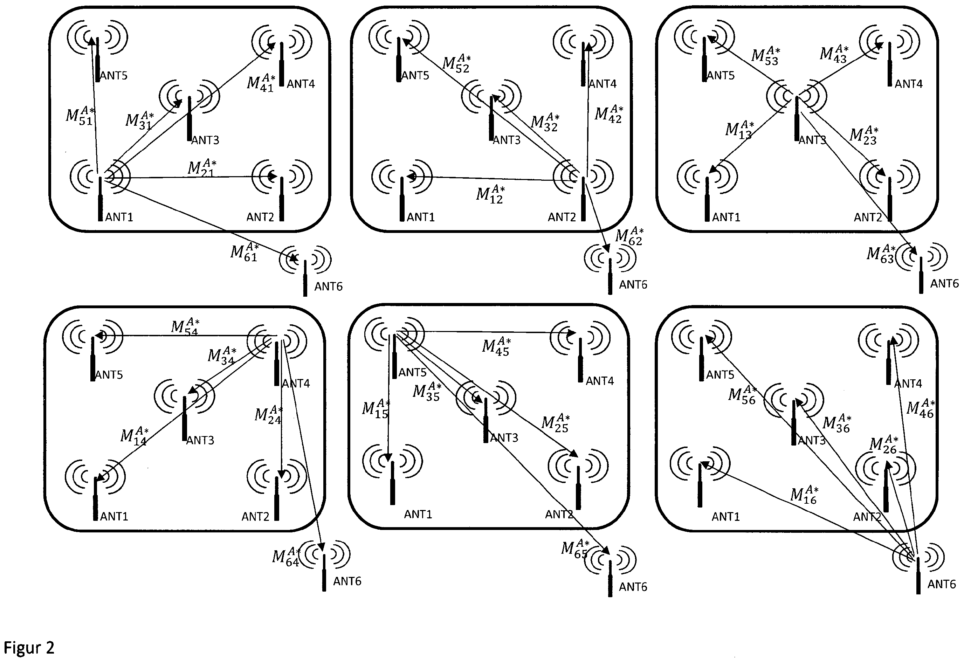

Zur Messung der Ausbreitungseigenschaften in der Systemumgebung werden die Antennen (und entsprechenden Sende/Empfangsfunktionen) so konfiguriert, dass das System sowohl elektromagnetische Strahlung aussendet als auch diese wieder empfängt. Komplexere Ansätze, die ein gleichzeitiges Senden und Empfangen beinhalten, sind Bestandteil des Verfahrens aber nicht Teil dieses Ausführungsbeispiels. Im einfachsten Fall wird nur eine Antenne zum Senden verwendet, während alle anderen Antennen im Empfangsmodus betrieben werden. Figur 2 zeigt ein Referenzsystem bestehend aus fünf zueinander beabstandeten Referenzfunkknoten und einem Testfunkknoten, die jeweils mit einer Antenne ausgerüstet sind.

Zur Charakterisierung des Umfeldes sollten die Antennen ANT1 bis ANT5 an exponierten Stellen positioniert sein, so dass sie die Energie maßgeblich in Bereiche abstrahlen, die von besonderem Interesse sind. Reihum (round-robin) wird jeweils von einer Position ein Referenzsignal ausgesendet, das dann von allen anderen Antennen empfangen wird. Diese Empfangssignale werden dann zur Extraktion der komplexen Signalvektoren

$$M_{ij}^A(j\omega) = f(H_{ij}^A(j\omega), T_{offset,ij}^A, f_{offset,ij}^A)$$

verwendet, wobei maßgeblich die Nutzsignalenergie aus dem Messergebnis extrahiert wird. Aus den Signalvektoren lassen sich die Kanalübertragungsfunktion $H_{ij}^A(j\omega)$ sowie der Zeit- und FrequenzOffset $T_{offset,ij}^A, f_{offset,ij}^A$ zwischen den Funkknoten bestimmen. Nach Vollzug aller Messungen entsteht eine Matrix $M^A$, die alle ermittelten Signalvektoren $M_{ij}^A(j\omega) = f(H_{ij}^A(j\omega), T_{offset,ij}^A, f_{offset,ij}^A)$ zusammenfasst:

$$M^A$$

$$= \begin{bmatrix} M_{11}^A & M_{12}^A & M_{13}^A & M_{14}^A & M_{15}^A \\ M_{21}^A & M_{22}^A & M_{23}^A & M_{24}^A & M_{25}^A \\ M_{31}^A & M_{32}^A & M_{33}^A & M_{34}^A & M_{35}^A \\ M_{41}^A & M_{42}^A & M_{43}^A & M_{44}^A & M_{45}^A \\ M_{51}^A & M_{52}^A & M_{53}^A & M_{54}^A & M_{55}^A \end{bmatrix}$$

Wie bereits dargestellt, sind die Kanaltransferfunktionen $H_{ij}^A(j\omega)$ eine wesentliche Komponente der Messwerte und enthalten die Informationen über das Ausbreitungsverhalten bzw. die verschiedenen Ausbreitungspfade zwischen den Knoten i und *j*. Eine wichtige Eigenschaft der Kanaltransferfunktionen ist ihr reziproker Charakter (Übertragungsverhalten ist richtungsunabhängig), d.h.:

$$H_{ij}^A(j\omega) = H_{ji}^A(j\omega)$$

Diese Eigenschaft fließt in die Integritätsanalyse ein. Unter Beachtung dieser Einschränkungen kann diese Eigenschaft auch für die Generierung ortsabhängiger Schlüssel und Implementierung entsprechender Verschlüsselungstechniken verwendet werden. Über die Inverse Fourier Transformation lassen sich die Kanalimpulsantworten $h_{ij}^A(t)$ ableiten und über diese die Länge von direkten und indirekten Pfaden extrahieren $h_{ij}^A(t) = F^{-1}\{H_{ij}^A(j\omega)\}$. Eine Alternative zur inversen Fourietransformation stellen die Eigenwertanalyse oder Signalklassifikation dar.

Die Elemente $M_{ii}^A(j\omega)$ kennzeichnen die Systemeigenschaft an der jeweiligen Position, soweit gesendete und empfangene Energie getrennt werden kann (hohe Isolationseigenschaften erforderlich). Dabei entsteht ein Bild der Übertragungsfunktion dieser Antenne zu sich selbst. Ist diese Eigenschaft nicht implementiert, sind die Diagonal-Elemente alle Null.

Eine differenzierte Behandlung erfordern die im Rahmen der Extraktion anfallenden System-inhärenten Parameter, wie Frequenz- und Zeitoffset. Der Frequenzoffset, der durch Abweichungen von der idealen Zeitreferenz und damit von Quarz-Toleranzen maßgeblich bestimmt wird, kann über längere Zeiträume als stabil betrachtet werden. Der Zeitoffset ist aber von vielen Unbekannten abhängig, die mit jedem Messvorgang eine neue Konstellation bilden. Daher ist der berechnete Zeitoffset nur für die Länge eines Messvorganges gültig und kann innerhalb dieses Zeitraums als deterministisch behandelt werden. Darüber hinaus gibt es auch weitere individuelle Parameter, die eine individuelle Erkennung einer System-Komponente erlauben. Diese kennzeichnen spezifische Abweichungen vom Idealverhalten und sind über entsprechende Modelle und Vergleichsverfahren ableitbar.

Ein System interagiert in der Regel mit anderen Komponenten, die Teil eines größeren Gesamtsystems sind und daher Zugriff auf System-Ressourcen bekommen sollen. Im Falle eines Zugangssystems ist die Lösung darauf ausgerichtet, weitere Objekte zu identifizieren und Ihren Zugriff auf Zugangsbereiche zu ermöglichen. Allein durch ihre Anwesenheit (Veränderung der Ausbreitungseigenschaften durch zusätzliche Reflexionen) und ihre Funktion (Aussenden von elektromagnetischer Strahlung, Störstrahlung) verändern sie in gewissem Maße die Funkumgebung bzw. erweitern selbige.

Diese Veränderungen sollen in der Folge betrachtet werden. Figur 2 zeigt bereits eine solche erweiterte Funkumgebung **A\*** am Beispiel eines Zugangssystems in Anwesenheit eines Schlüssels (qualifizierte Komponente). In diesem konkreten Fall ist der Einfluss des Schlüssels in erweitertem Sinn zu verstehen, da der Schlüssel im Zusammenhang mit seinem Träger (eine Person) die Funkumgebung beeinflusst. Der Träger des Testfunkknoten ist als Objekt erkennbar. Es entsteht eine Verbindung zwischen dem Testfunkknoten und dem durch den Träger repräsentierten Testfunkknoten-Objekt.

Das Eintreten eines Testknotens und entsprechend zugeordneter Objekte führt zu Veränderungen der Ausbreitungsbedingungen. Im einfachsten Fall kann ein Zugangssystem nur auf Grund von einem geänderten Ausbreitungsverhalten auf Veränderungen im Umfeld schließen. Die Extraktion von Lageinformation bis hin zu Bewegungsprofilen ist auch für passive Objekte möglich.

Im aktiven Fall können alle Antennen (einschließlich der Antennen der zusätzlichen Komponenten) sowohl Referenzsignale senden als auch elektromagnetische Energie empfangen und die empfangenen Signale werden beispielsweise hinsichtlich Nutz- und Störsignalverlauf als auch bzgl. der Rauscheigenschaften analysiert. Die Erweiterung des Systems um mindestens einen Testfunkknoten führt zu einer Erweiterung der Matrix der Mess-Ergebnisse.

$$M_{ij}^{A*}(j\omega) = f\left(H_{ij}^{A*}(j\omega), T_{offs,ij}^{A*}, f_{offs,ij}^{A*}\right).$$

Durch Einschluss des Testfunkknotens in den Messprozess ist es möglich, die Merkmale des Funkumfelds A zu erweitern, so dass charakteristische Merkmale einer erweiterten Funkumgebung **A\*** entstehen. Figur 2 stellt die erweiterten Messmöglichkeiten dar, wenn die Testfunkknoten, z.B. in Schlüsseln enthaltene Testfunkknoten, in den Messprozess einbezogen werden.

Die entsprechende Matrix $M^A$ erweitert sich pro zusätzlichem Funkknoten um eine Zeile und eine Spalte zu einer Matrix $M^A*$:

$$M^{A*} = \begin{bmatrix} M_{11}^{A*} & M_{12}^{A*} & M_{13}^{A*} & M_{14}^{A*} & M_{15}^{A*} & M_{16}^{A*} \\ M_{21}^{A*} & M_{22}^{A*} & M_{23}^{A*} & M_{24}^{A*} & M_{25}^{A*} & M_{26}^{A*} \\ M_{31}^{A*} & M_{32}^{A*} & M_{33}^{A*} & M_{34}^{A*} & M_{35}^{A*} & M_{36}^{A*} \\ M_{41}^{A*} & M_{42}^{A*} & M_{43}^{A*} & M_{44}^{A*} & M_{45}^{A*} & M_{46}^{A*} \\ M_{51}^{A*} & M_{52}^{A*} & M_{53}^{A*} & M_{54}^{A*} & M_{55}^{A*} & M_{56}^{A*} \\ M_{61}^{A*} & M_{62}^{A*} & M_{63}^{A*} & M_{64}^{A*} & M_{65}^{A*} & M_{66}^{A*} \end{bmatrix}$$

Die Matrixelemente $M_{ij}^{A*}(j\omega) = f\left(H_{ij}^{A*}(j\omega), T_{offset,ij}^{A*}, f_{offset,ij}^{A*}\right)$ werden wesentlich durch die Kanal-Transferfunktionen $H_{ij}^{A*}(j\omega)$ und den linkspezifischen Zeit- und Frequenzoffset (Link bedeutet Verbindung zwischen zwei Komponenten) geprägt.

Die Kanaltransferfunktionen schließen jetzt sowohl die passiven Veränderungen des Ausbreitungsverhaltens durch die zusätzlichen Komponenten als auch die zusätzlichen Charakteristiken ein, welche durch Einbindung in den Messablauf entstehen. Entsprechend ergibt sich auch eine erweiterte Matrix von Kanalimpulsantworten $h_{ij}^{A*}(t)$, die Informationen über die Veränderung von Ausbreitungspfaden enthält. Wichtig zu vermerken ist, dass die Elemente der Matrix $M^A$ und der Matrix $M^A*$ nicht voneinander unabhängig sind, da sich die Ausbreitungsbedingungen nicht in allen Aspekten ändern. Dies kann bei einer Merkmals-Extraktion und entsprechenden Integritäts- und Plausibilitätstests genutzt werden.

Ähnliche Aussagen gelten auch für die im Rahmen der Extraktion anfallenden System-inhärenten Parameter, wie Frequenz- und Zeitoffset und für darüber hinaus extrahierte individuelle Eigenschaften der einzelnen Komponenten.

## 3.2 Veränderungen einer Funkumgebung im Falle eines Relais Angriffs

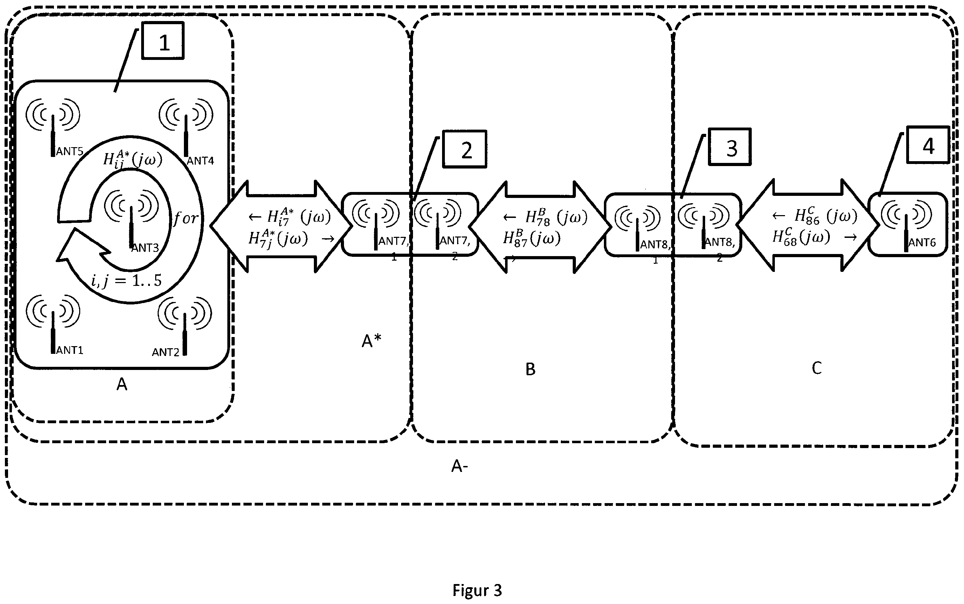

In diesem Abschnitt wird auf die Veränderungen der Parameter/Merkmale einer Funkfeld-Identifikation/Integritätsprüfung im Falle eines Relais Angriffs eingegangen. Da ein Relais-Angriff im Kern auf der Weiterleitung von Signalen beruht, soll dieser Angriff als Verkettung von Funkumgebungen betrachtet werden, die jede für sich und in Form ihrer Interaktion die Ausbreitung der Referenzknotensignale und der Testfunkknotensignale und deren Auswertung beeinflussen und damit eine neue Funkumgebung bilden. Figur 3 zeigt überblicksmäßig die Konstellation bei einem Angriff dieser Art. Im Ergebnis entsteht eine Funkumgebung, die hier mit A- bezeichnet wird. Sie kann als Verknüpfung der Auswirkungen der einzelnen Funkumgebungen betrachtet werden.

Der Testfunkknoten ANT6 - als bezügliche ihrer Zugehörigkeit / Anwesenheit in einer Funkumgebung zu prüfende Komponente - befindet sich außerhalb der Reichweite des Zugangssystems bzw. Referenzsystems 1 aus Referenzfunkknoten ANT1, ANT2, ANT3, ANT4 und ANT5. Ein Angriff erfolgt über ein Relais-System mit den Angreifern 2 und 3, das über die Antennen ANT7,1 und ANT7,2 des ersten Angreifers 2 und die Antennen ANT8,1 und ANT8,2 des zweiten Angreifers 3 aufgespannt wird. Während sich der erste Angreifer 2 in die Umgebung des Zugangssystems begibt und dabei eine **A\*** Umgebungs-Charakteristik erzeugt, nähert sich der zweite Angreifer 3 dem SchlüsselBesitzer, also dem Testfunkknoten ANT 6. Bei genauer Betrachtung zeigt sich, dass bei einem Relais Angriff drei Funkfeldumgebungen in Wechselwirkung treten:

- die erweiterte Umgebung **A\*** des Zugangssystems 1 in Präsenz einer zusätzlichen Komponente ANT1-50ANT7,1, die Eigenschaften der Umgebung A des Zugangssystems 1 in sich trägt; das erste Angriffssystem 2 mit den Antennen ANT7,1 und ANT7,2 erzeugen im Umfeld A des Zugangssystems 1 analoge Veränderungen der Ausbreitungsbedingungen, wie sie ein qualifiziertes System (4) bei Präsenz erzeugen würde,
- die Umgebung B (ANT7,2⇔ANT8,1) des Relais Systems zwischen den beiden Angreifern 2 und 3,
- die Umgebung C des Schlüssels bzw. Testfunkknotens ANT6 (ANT8,2 ⇔ ANT6).

Ein Relais Angriff, der Sicherheitsmaßnahmen bzgl. Zeit- und Abstandsbegrenzungen (Distance Bounding) auf Basis von Signal-Vektormessungen in seine Strategie einbezieht (Terrorist Attack), konzentriert sich auf die Abbildung des kürzesten Pfades (wie in A. R. S. C. Hildur Olafsdottir, "On the Security of Carrier Phase-based Ranging", https://www.researchgate.net/publication/254008732_Physical-layer_attacks_on_chirp-based_ranging_systems, Proceedings of Cryptographic Hardware and Embedded Systems (CHES) dargestellt). Durch Modifikation der Signalcharakteristik wird der Einfluss der durch die Gruppenlaufzeit bedingten Phasenverschiebung kompensiert. Dabei wird die dem Verfahren innewohnende Periodizität und die damit einhergehende Abstandsmehrdeutigkeit ausgenutzt.

Dabei ergeben sich eine ganze Reihe von Elementen, die in Ihren Eigenschaften eine hohe Gemeinsamkeit zu den Funkumgebungen A und **A\*** haben und damit eine entsprechende Anbindung für die Integritäts- und Plausibilitätstests zu den extrahierten Merkmalen der Umgebung A bilden. (Diese bilden quasi den Ausgangspunkt einer Merkmalsextraktion, bei der das Zugangssystem die Umgebung bewertet.) Darüber hinaus entstehen Konfigurationen, die über das Relais-System die Funkumgebungen A→A\*, B und C in Verbindung zueinander setzen. Zum einen werden Informationen, die die Umgebung A bzw. **A\*** des Zugangssystems 1 und die Umgebung B des Relais Systems 2 und 3 charakterisieren, in die Umgebung C des Schlüsselsystems 4 verlagert und dort vom Schlüssel empfangen. Zum anderen werden Informationen/Merkmale der Schlüssel-Funkumgebung C und der Relais-Funkumgebung B über das Relais System zu den Referenzfunkknoten des Zugangssystems transportiert. Die einzelnen Funkumgebungen überlagern sich quasi in ihrem Reflexionsverhalten. Über die Datenkommunikation können Schlüssel und Zugangssystem in verschlüsselter Form kommunizieren und dabei verschiedenste Ergebnisse der Merkmalsprüfung untereinander austauschen, ohne dass das Relais-System darauf Einfluss nehmen kann. Dies erlaubt eine koordinierte Vorgehensweise bei der Auswertung der verschiedenen Merkmale auf beiden Seiten (Zugangssystem und Tag).

Im Vorfeld einer Zugangsanforderung durch einen Testfunkknoten baut das Zugangssystem eine Datenbasis auf und hält diese auf dem aktuellen Stand. Diese beschränkt sich auf die Funkumgebung A des Zugangssystems 1.

Sobald das System eine Zugangsanforderung erhält, entsteht eine erweiterte Matrix, die die zusätzlichen Zeilen und Spalten enthält, die bei der Erweiterung des Mess-Prozesses um die zusätzliche Schlüssel-Komponente 4 entsteht. Die Ergebnisse werden zur Merkmalsextraktion und zur Plausibilitätsprüfung benutzt.

Es wird zwischen einem Qualifizierten Zugang und der Identifikation eines Relais-Angriffs unterschieden. Die ermittelten Messwerte werden bezüglich dieser zwei Kategorien bewertet. Die positive Bewertung der Matrix der extrahierten (gemessenen) Signalvektoren hinsichtlich einer Anzahl von Eigenschaften/Test führt zu einer Einstufung der Zugangsanforderung als qualifizierter Zugang.

Die ermittelten Signalvektoren entsprechen einer Ausprägung der Signalvektor-Matrix $M^{A*}$. Im Fall eines Relais-Angriffs entspricht die ermittelte Signalvektor-Matrix einer Ausprägung der Signalvektor-Matrix $M^{A}$**-**, wodurch ein Relais-Angriff anhand der entsprechenden Eigenschaften /Tests identifiziert werden kann. Diese beiden Matrizen sind in den folgenden Gleichungen vollständig dargestellt:

Qualifizierter Zugang:

$$M^{A*} = \begin{bmatrix} M_{11}^{A*} & M_{12}^{A*} & M_{13}^{A*} & M_{14}^{A*} & M_{15}^{A*} & M_{16}^{A*} \\ M_{21}^{A*} & M_{22}^{A*} & M_{23}^{A*} & M_{24}^{A*} & M_{25}^{A*} & M_{26}^{A*} \\ M_{31}^{A*} & M_{32}^{A*} & M_{33}^{A*} & M_{34}^{A*} & M_{35}^{A*} & M_{36}^{A*} \\ M_{41}^{A*} & M_{42}^{A*} & M_{43}^{A*} & M_{44}^{A*} & M_{45}^{A*} & M_{46}^{A*} \\ M_{51}^{A*} & M_{52}^{A*} & M_{53}^{A*} & M_{54}^{A*} & M_{55}^{A*} & M_{56}^{A*} \\ M_{61}^{A*} & M_{62}^{A*} & M_{63}^{A*} & M_{64}^{A*} & M_{65}^{A*} & M_{66}^{A*} \end{bmatrix}$$

Relais-Angriff:

$$M^{A-} = \begin{bmatrix} M_{11}^{A-} & M_{12}^{A-} & M_{13}^{A-} & M_{14}^{A-} & M_{15}^{A-} & M_{16}^{A-} \\ M_{21}^{A-} & M_{22}^{A-} & M_{23}^{A-} & M_{24}^{A-} & M_{25}^{A-} & M_{26}^{A-} \\ M_{31}^{A-} & M_{32}^{A-} & M_{33}^{A-} & M_{34}^{A-} & M_{35}^{A-} & M_{36}^{A-} \\ M_{41}^{A-} & M_{42}^{A-} & M_{43}^{A-} & M_{44}^{A-} & M_{45}^{A-} & M_{46}^{A-} \\ M_{51}^{A-} & M_{52}^{A-} & M_{53}^{A-} & M_{54}^{A-} & M_{55}^{A-} & M_{56}^{A-} \\ M_{61}^{A-} & M_{62}^{A-} & M_{63}^{A-} & M_{64}^{A-} & M_{65}^{A-} & M_{66}^{A-} \end{bmatrix}$$

<u>Äquivalenz auf Basis von Präsenz in Funkfeld A:</u> Dieser Abschnitt konzentriert sich zunächst auf die Komponenten, die Veränderungen im Ausbreitungsverhalten im Umfeld des Zugangssystems anzeigen.

Zunächst werden die einer der Kategorien zuzuordnenden Matrix-Elemente $M_{ij}^{A?}$ für $i,j$ = 1...5 betrachtet.

Da sich das Teilsystem 2 des Relais-Systems (ANT7,1⇔ANT7,2) im Umfeld des Zugangssystems 1 befindet, erzeugt die Präsenz dieses Systems nur Veränderungen in den Signalvektoren, die in erster Ordnung plausible Änderungen im Sinne einer Transition der Funkumgebung A zu einer möglichen Umgebung **A\*** sind (und damit Teil des Merkmalsraum von A\*). Die Messergebnisse zeigen jedoch Bewegungen im Bereich des Zugangssystems sehr effektiv an und erlauben damit die Extraktion von Bewegungsprofilen. Erweitert man jetzt die Analyse um eine Inertial-Sensorik, an dem Testfunkknoten (z.B. in dem Schlüssel, in einem Smart Phone), dann kann man durch Plausibilitätstests nachweisen, inwieweit die Merkmale der Bewegung auf der Schlüssel-Seite mit Bewegungen auf der Seite des Zugangssystems übereinstimmen und auf diese Weise einen Angriff detektieren.

<u>Äquivalenz bzgl. der zusätzlichen Elemente des Funkfeldes A\*:</u> Als nächsten werden die Signalvektoren betrachtet, die unter direkter Einbeziehung des Schlüssels 4 bzw. des Testfunkknotens ANT6 und des Relais-Systems 2 und 3 bzw. ANT7,1⇔... ⇔ANT8,2 abgeleitet werde. Während bei einem autorisiertem Zugriff der Schlüssel Teil der Funkumgebung **A\*** ist, entsteht bei einem Relais-Angriff eine Verkettung von 3 Transferfunktionen:

- ANT1-5⇔ANT71,1 → **A\***
- ANT7,2⇔ANT8,1 → B
- ANT8,2 ⇔ ANT6 → C.

Um diesen Vorgang in einem Modell abzubilden, werden die entsprechenden Kanalübertragungsfunktionen zu den Umgebungen A\*, B und C verbunden. Damit lassen sich die Veränderungen innerhalb der Signalvektor-Matrix bei einem Relais-Angriff durch folgende Zusammenhänge abbilden.

Qualifizierter Zugang:

$$M^{A*} = \begin{bmatrix} M_{11}^{A*} & M_{12}^{A*} & M_{13}^{A*} & M_{14}^{A*} & M_{15}^{A*} & M_{16}^{A*} \\ M_{21}^{A*} & M_{22}^{A*} & M_{23}^{A*} & M_{24}^{A*} & M_{25}^{A*} & M_{26}^{A*} \\ M_{31}^{A*} & M_{32}^{A*} & M_{33}^{A*} & M_{34}^{A*} & M_{35}^{A*} & M_{36}^{A*} \\ M_{41}^{A*} & M_{42}^{A*} & M_{43}^{A*} & M_{44}^{A*} & M_{45}^{A*} & M_{46}^{A*} \\ M_{51}^{A*} & M_{52}^{A*} & M_{53}^{A*} & M_{54}^{A*} & M_{55}^{A*} & M_{56}^{A*} \\ M_{61}^{A*} & M_{62}^{A*} & M_{63}^{A*} & M_{64}^{A*} & M_{65}^{A*} & M_{66}^{A*} \end{bmatrix}$$

*Relais - Angriff:*

$$M^{A-} = \begin{bmatrix} M_{11}^{A*} & M_{12}^{A*} & M_{13}^{A*} & M_{14}^{A*} & M_{15}^{A*} & M_{17}^{A*}\cdot M_{78}^{B}\cdot M_{86}^{C} \\ M_{21}^{A*} & M_{22}^{A*} & M_{23}^{A*} & M_{24}^{A*} & M_{25}^{A*} & M_{27}^{A*}\cdot M_{78}^{B}\cdot M_{86}^{C} \\ M_{31}^{A*} & M_{32}^{A*} & M_{33}^{A*} & M_{34}^{A*} & M_{35}^{A*} & M_{37}^{A*}\cdot M_{78}^{B}\cdot M_{86}^{C} \\ M_{41}^{A*} & M_{42}^{A*} & M_{43}^{A*} & M_{44}^{A*} & M_{45}^{A*} & M_{47}^{A*}\cdot M_{78}^{B}\cdot M_{86}^{C} \\ M_{51}^{A*} & M_{52}^{A*} & M_{53}^{A*} & M_{54}^{A*} & M_{55}^{A*} & M_{57}^{A*}\cdot M_{78}^{B}\cdot M_{86}^{C} \\ M_{71}^{A*}\cdot M_{87}^{B}\cdot M_{68}^{C} & M_{72}^{A*}\cdot M_{87}^{B}\cdot M_{68}^{C} & M_{73}^{A*}\cdot M_{87}^{B}\cdot M_{68}^{C} & M_{74}^{A*}\cdot M_{87}^{B}\cdot M_{68}^{C} & M_{75}^{A*}\cdot M_{87}^{B}\cdot M_{68}^{C} & M_{66}^{A*} \end{bmatrix}$$

Da ANT7,1 des Relais-Angriffs-Systems 2 Teil der Funkumgebung **A\*** ist, sind die Elemente $M_{7j}^{A*}$ Teil des Raums der qualifizierten Elemente $M_{6j}^{A*}$ *für alle j* = 1..5 und die Elemente $M_{i7}^{A*}$ sind Teil des qualifizierten Raums der Elemente $M_{i6}^{A*}$ *für alle i* = 1..5.

Im Gegensatz dazu kennzeichnen die Elemente $M_{87}^{B}$ and $M_{78}^{B}$ die Ausbreitungsbedingungen innerhalb der Funkumgebung B und die Elemente $M_{68}^{C}$ and $M_{86}^{C}$ spiegeln die Ausbreitungseigenschaften der Funkumgebung C. Beim Durchlaufen dieser Umgebungen spiegeln sich neben dem direkten Pfad durch die Umgebungen B und C auch die in diesen Umgebungen vorhandenen indirekten Ausbreitungswege wieder.

Um gegenüber dem Zugangssystem einen der Umgebung **A\*** entsprechenden Abstand des Schlüssels 4 abzubilden, muss bei Nutzung eines Frequenz-Domain basierten Verfahrens der Phasengang angepasst werden. Wie in A. R. S. C. Hildur Olafsdottir, "On the Security of Carrier Phase-based Ranging", https:// www.researchgate.net/publication/254008732_Physical-layer_attacks_on_chirp-based_ranging_systems, Proceedings of Cryptographic Hardware and Embedded Systems (CHES) beschrieben, erfolgt dies in der Regel durch Ausnutzung der Mehrdeutigkeit des Phasengangs, der sich mit Vielfachen des Abstands-Periode (Distance-Wrap-Around) wiederholt. Bei Kenntnis der Frequenz-Schrittweite, wird eine entsprechende Verzögerung eingefügt, die den direkten Ausbreitungsweg quasi in den für eine Erkennung der Umgebung **A\*** gültigen Bereich verschiebt.

Diese Korrektur lässt aber die Beziehungen des ursprünglichen direkten Pfades zu den (in den jeweiligen Funkumgebungen des Relais-Systems B und des Schlüssels C) existierenden indirekten Pfaden unberührt, d.h. alle indirekten Pfaden der Umgebungen B und C erscheinen im Messergebnis auf der Schlüsselseite und auf der Zugangssystem-Seite. Sind indirekte Pfade in den Umgebungen B und C vorhanden, so werden diese zu Abweichungen gegenüber validen Merkmalsverteilungen im Raum **A\*** führen, die durch Plausibilitäts- und Integritätstest identifizierbar sind. Eine Bereinigung der jeweils der Schlüssel bzw. dem Zugangssystem übermittelten Relais-Signale um den Einfluss der indirekten Pfade der Umgebungen B und C (die durch ein Relais-System erfolgen müsste) bringt eine Komplexität mit sich, die mehrere Größenordnungen über der Komplexität der Korrektur des direkten Pfades liegt.

Darüber hinaus ist noch ein Einfluss durch die internen Eigenschaften des Relais-System 2, 3 zu erwarten:

- ANT7,1 | ANT7,2
- ANT8,1 | ANT8,2

Einerseits ist damit zu rechnen, dass durch die Anpassung des Phasenganges andere charakteristische Merkmale, wie z.B. die Device (Frequenz Offset) oder Messvorgangsspezifischen Eigenschaften (Zeitoffset) beeinflusst werden. Je nach Implementierung (z.B. Frequenzumsetzung und Übertragung über Funk, aktive bi-direktionale Kabel-Verbindung mit Verstärkung zur Kompensation von Freiraumdämpfung, etc.) ergeben sich Verzerrungen, die detektierbar sind.

Für eine Detektion ist neben dem genannten Zeit- und Frequenz-Offsets eine Erfassung und Steuerung verschiedenster Systemparameter angeraten. Dafür kommen die entsprechenden Verstärkungseinstellungen der Empfänger und Sender und die ermittelten Phasenoffsets der Oszillatoren in Frage. Während ein Angriffssystem den Phasengang modifiziert, um den gemessenen direkten Pfad zu manipulieren, erhöht eine Verfolgung dieser System und verbindungsabhängigen Parameter die Anforderungen an das Relais-System, da alle Verzerrungen unterhalb des Detektions-Schwellwerts gehalten werden müssen.

Abschließend soll vermerkt werden, dass neben der Detektierbarkeit von Inkonsistenzen hinsichtlich indirekter Ausbreitungswege auch die schmal-bandige Messung der Umlaufzeit enge Grenzen für eine Manipulation der Ausbreitungscharakteristik setzt.

**4 Integritäts- und Plausibilitätstest auf erweiterte Sätze von Merkmalen**

In den vorherigen Abschnitten wurde die Funkknoten- und Objekterkennung im Zusammenhang mit der Auswertung von Systemtransferfunktionen zur Prüfung der Integrität der Funkumgebung eines Referenzsystems dargelegt. Dabei wurde zunächst ein entsprechendes Modell dargestellt, das die Abbildung von Objekten und Funkknoten im Zusammenhang mit messtechnisch ermittelten Systemtransferfunktionen ermöglicht. Danach wurde die Ableitung von Lageinformationen auf Basis der aus den Systemtransferfunktionen extrahierten Ausbreitungswege gezeigt. Darüber hinaus wurde eine Analyse der Systemtransferfunktionen im Frequenzbereich dargestellt. In Ergänzung wurden verbindungsspezifische Parameter, wie Frequenz-, Zeit- und Phasenoffset in eine Merkmalsanalyse eingebunden.

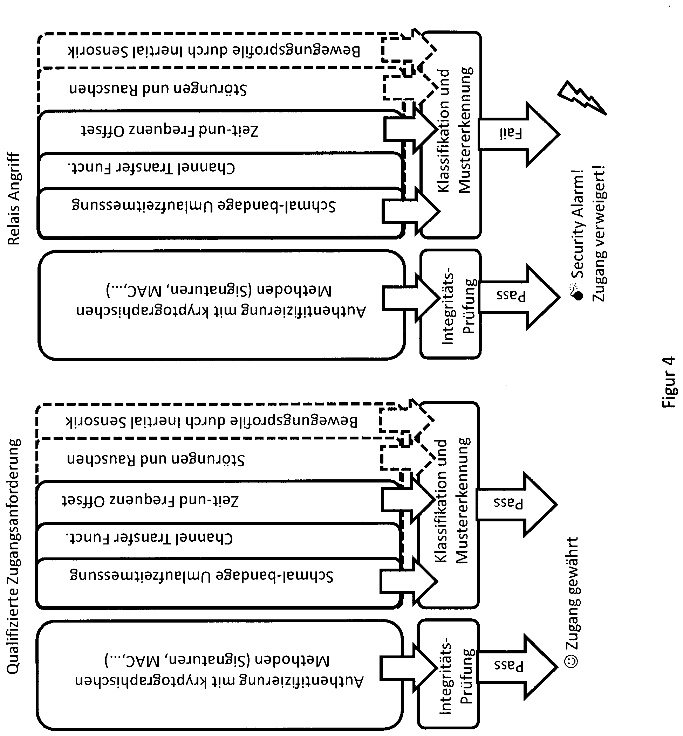

Figur 4 stellt dar, wie die Integritätsprüfung der Funkumgebung über die Analyse von Transferfunktionen durch Funkknoten- und Objekterkennung die Sicherheit eines Zugangssystems, dass Challenge-Response basierte Authentifizierungsverfahren benutzt, erhöht.

Einfache Verfahren zur Etablierung eine Aufenthaltszone (Distance Bounding), wie sie bereits mit schmalbandigen zeitbasierten Verfahren zur Umlaufzeitmessung ermöglicht werden, können ergänzt und dabei die Sicherheit erhöht werden. Eine Einbeziehung der auf Seiten des Referenzsystems und des Testfunkknotens ermittelten Zeit- und Frequenzoffsets erlaubt die Definition weiterer relevanter Tests und damit eine Erhöhung des Vertrauenslevels.

Im Zusammenhang mit den bereits vorhandenen Möglichkeiten zur absoluten Zeit und Abstandsmessung entsteht so ein Merkmalsraum, der es erlaubt Funkknoten innerhalb ihrer Funkumgebung eindeutig zu identifizieren. Kanalbelegungsscans und Protokoll Statistiken erlauben Rückschlüsse auf Störfeldeinflüsse und können ebenfalls in die entsprechenden Integritätstests einfließen. Neben den hier beschriebenen Merkmalen besteht noch die Möglichkeit weitere Sensorik zur Extraktion von Bewegungsprofilen heranzuziehen. Dazu bietet sich Inertial-Sensorik an, die sowohl die Lage eines Objektes als auch seine Bewegung detektieren.

Über Klassifikations-Analysen, wie z.B. der Stützvektormethode (engl. Support Vector Machine) kann die Plausibilität und Integrität der Messergebnisse und damit die Anwesenheit eines Funkknotens innerhalb eines Umfeldes nachgewiesen werden.

Die Erweiterung auf die Identifikation von umgebungsspezifischen Objekten und Funkknoten und die entsprechende Ermittlung der Lageinformationen erlaubt eine Reduktion der Sensordaten auf Lagebeziehungen und damit die Generierung höherwertiger Merkmale, die in die Prüfung der Integrität einbezogen werden können. Darüber hinaus führen die ermittelten Messdaten zu überbestimmten Gleichungssystemen, die zur Ableitung zusätzlicher Qualitätsparameter genutzt werden können.

Auch eine Erweiterung um die Erkennung weiterer Objekte stärkt die Qualität der Klassifikation.

Dabei unterscheidet man:

- Referenzobjekt, das konstruktive mit den Referenzfunkknoten verbunden ist,
- Das Testobjekt, das konstruktive mit dem Testfunkknoten verbunden ist,
- Umgebungsobjekte in der unmittelbaren Umgebung des Referenzobjekts und des Testobjekts.

Diese Vorgehensweise erlaubt es quantitativ und qualitativ die Prüfung der Integrität umzusetzen. Eine mögliche Vorgehensweise zur Festlegung einer minimalen Anzahl von positiv zu prüfenden Tests kann die folgenden Aspekte beinhalten:

1. Wurde (überhaupt) ein Objekt von dem Referenzsystem erkannt und Lagebeziehungen (im einfachsten Fall Isolinien eines Abstands, einer Abstandsdifferenz oder auch einer Abstandssumme oder akkumulierten Abstands) extrahiert?
2. Wurde ein Objekt unter Einbeziehung des Testknotens erkannt bzw. in den Messergebnissen des Testknotens?
3. Wurde der Testfunkknoten von Referenzsystem erkannt und Lagebeziehungen (im einfachsten Fall Isolinien eines Abstands, einer Abstandsdifferenz oder auch einer Abstandssumme oder akkumulierten Abstands) extrahiert?
4. Objekterkennung

   a. Stimmen die ermittelten Lageinformationen eines Objekts innerhalb vorgegebener Toleranzen mit den Lageinformationen des Testfunkknoten überein, sodass geschlossen werden kann, dass es sich bei dem Objekt um das Testfunkknoten-Objekt handelt?
   b. Stehen die vom Referenzsystem unter Nutzung der Referenzfunkknoten ermittelten Objekte in einem sinnvollen Zusammenhang zu den vom Referenzsystem unter Einbeziehung des Testfunkknoten ermittelten Objekten? z.B.:

      i. Werden unter Einbeziehung des Testknotens zusätzliche Objekte erkannt?
      ii. Stützt das Ergebnis der Objekterkennung unter Einbeziehung des Testfunkknotens die Ergebnisse der Objekterkennung unter ausschließlicher Verwendung von Referenzknoten? e.g, erhöht sich der Vertrauenslevel (Confidence Level) in eine Positionsbestimmung oder verringert sich der Vertrauenslevel, z.B. unter Nutzung von RAIM (Receiver Autonomous Integrity Monitoring)

c. Befindet sich gemäß der ermittelten Lageinformation der Testknoten und das Testknoten-Objekt innerhalb eines vorgegebenen Bereichs innerhalb des Referenzknotenkoordinaten-Systems?

i. Befindet sich der Testknoten innerhalb eines maximalen Abstands zum Referenzsystem? (Distance Bounding)
ii. Befindet sich der Testknoten innerhalb einer Zone um eine Zielposition? (Zoning)

5. Bewegungsprofile

a. Erhöht sich der Vertrauenslevel (Confidence Level) der durch das Referenzsystem ermittelten Objektbewegungsprofile unter Einbeziehung des Testfunkknoten in den Messprozess. oder verringert sich der Vertrauenslevel, z.B. unter Nutzung von RAIM (Receiver Autonomous Integrity Monitoring) ...

6. Sensorfusion

a. Prüfung charakteristischer Merkmale der durch Objekt- und Funkknotenerkennung extrahierten Bewegungsprofile
b. Vergleich der charakteristischen Merkmale der ortungsbasierten Bewegungserkennung auf Auswertung von Inertial-Sensorik basierte Bewegungsprofilen

Dabei werden in der Regel die Ergebnisse, die ausschließlich unter Nutzung der Messergebnisse der Referenzfunkknoten gewonnen wurden, mit den Ergebnissen verglichen, die unter zusätzlicher Einbeziehung des Testfunkknoten gewonnen werden. Es kann leicht gezeigt werden, dass auf diesem Weg eine Vielzahl von charakteristischen Sensordaten ermittelt werden kann. Die Extraktion hochwertiger Merkmale ist daher wesentlich, um die Masse an Daten schnell auf eine Zahl von Entscheidungskriterien zu reduzieren. Dabei kann auch auf Methoden der KI zurückgegriffen werden.

**5 Messprozess**

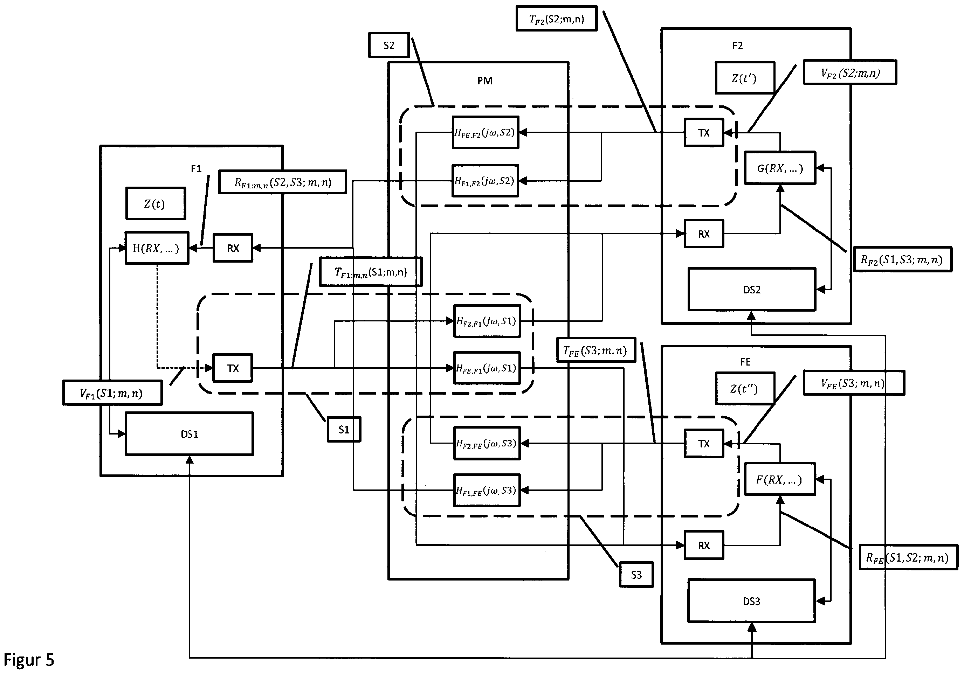

Die Figur 5 zeigt schematisch eine Anordnung von drei Funkknoten F1, F2 und FE zur Durchführung einer weiteren alternativen Ausführungsform des erfindungsgemäßen Verfahrens für Funkmessanwendungen. Jeder der drei Funkknoten verfügt jeweils über eine Empfangseinheit RX, eine Sendeeinheit TX, eine Datenschnittstelle DS1 bzw. DS2 bzw. DS3 (kann auch mit der Funkschnittstelle identisch sein) und einen eigenen Zeitgeber $Z(t)$ bzw. $Z(t')$ bzw. $Z(t'')$. Weiterhin besitzen die Funkknoten eine Einheit, die es erlaubt, empfangen Signalvektoren als Eingangssignalvektoren der Sendeeinheit zuzuführen. Die Sendesignale werden über ein Ausbreitungsmedium (PM), das durch Kanaltransferfunktionen bestimmt ist, zwischen den Funkknoten übertragen.
Zur Unterscheidung zwischen den Funkknoten sind die entsprechenden Größen durch Anstriche (z.B. Frequenzen und Zeiten des $f'_p$, $\omega'_p$, $t'$,...) gekennzeichnet.
Die zugehörigen Zeitgeber $Z(t)$, $Z(t')$ $Z(t'')$ umfassen jeweils einen Quarzoszillator und geben ein Zeitmaß für die jeweilige Zeitbasis $t$, $t''$ bzw. $t''$ der jeweiligen Funkknotens vor.
Die Zeitgeber erzeugen jeweils eine Zeitreferenz für eine Ablaufsteuerung innerhalb des jeweiligen Funkknotens. Die Ablaufsteuerung steuert das zeitliche Verhalten aller relevanten Funktionsblöcke in den jeweiligen Funkknoten. Die Ablaufsteuerung gibt auch die Zeitpunkte für einen Frequenzwechsel vor.
Es sei angemerkt, dass die zeitlichen Längen $T_{MU}$, $T'_{MU}$ bzw. $T''_{MU}$ jeweils ein vorgegebenes kleinstes Zeitintervall bezeichnen, wobei das kleinste Zeitintervall auch als Messeinheitszeit $T_{MU}$ bezeichnet wird.
Es wird vorausgesetzt, dass die Zeitgeber in gleichen Einheiten fortschreiten, die aus der jeweiligen Zeitbasis abgeleitet sind. Sollte zwischen den Zeitgebern ein Frequenzoffset bestehen, muss der Frequenzoffset korrigiert werden, um das Verfahren durchzuführen.

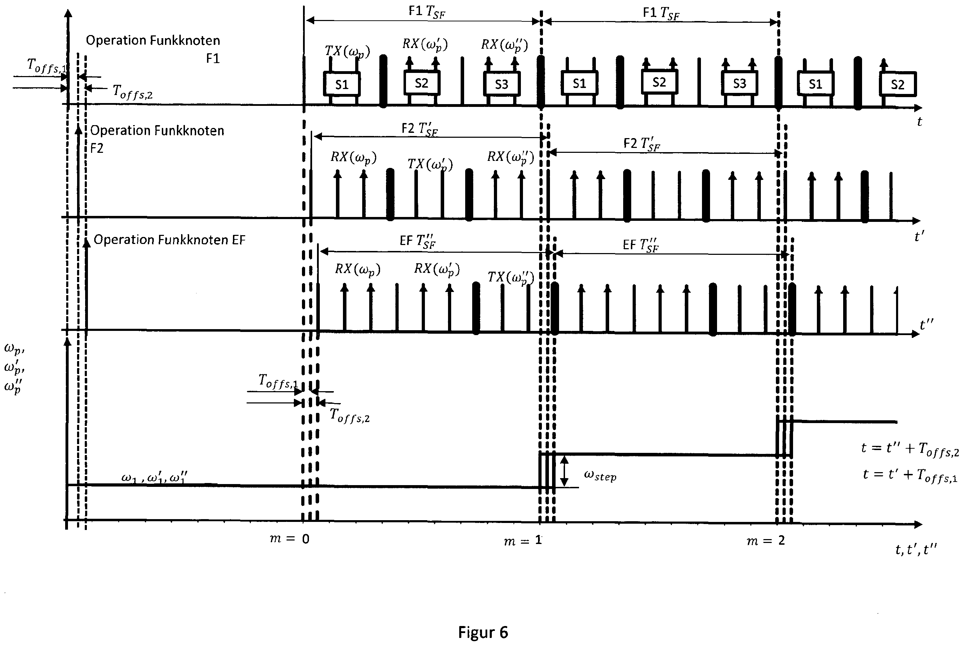

Die Figur 6 veranschaulicht einen Ablauf des erfindungsgemäßen Verfahrens mit drei Funkknoten über die jeweilige Zeitachse $t$ bzw. $t'$ bzw. $t''$. Zwischen den einzelnen Zeitbasen besteht jeweils ein Zeitoffset $T_{offs,1}$ bzw. $T_{offs,2}$.
Eine Schrittfolge besteht aus drei Schritten, wobei in dem ersten Schritt S1, der Funkknoten F1 in dem Sendemodus ein Initialsignal $T_{F1}$ aussendet, welches von den beiden Funkknoten F2 und FE empfangen wird, in dem zweiten Schritt S2 der Funkknoten F2 ein Antwortsignal $T_{F2}$ aussendet, welches vom den Funkknoten F1 Transponder FE empfangen wird, und in dem dritten Schritt S3, der Funkknoten FE ein Antwortsignal $T_{FE}$ aussendet, welches von den Funkknoten F1 und F2 empfangen wird.

Die Schrittfolge nimmt ein Zeitintervall $T_{SF}$ ein, wird mehrfach wiederholt und dabei wird die Frequenz $\omega_p$, $\omega'_p$, $\omega''_p$ um die Schrittweite $\omega_{step}$ verändert, wobei der Index m die Wiederholungen angibt. Das Sendesignale sind zumindest während einer Schrittfolge, also während des Zeitintervalls $T_{SF}$ kohärent.

Es sei angemerkt, dass das Verfahren umfasst:

- Schritte ausweisend eine oder mehrere Sendefenster bzw. Empfangsfenster für die einzelnen Funkknoten,
- Schrittfolgen umfassend wenigstens zwei Schritte mit einer zeitlichen Länge $T_{SF}$, $T_{SF}$ bzw. $T''_{SF}$ der einzelnen Funkknoten,
- Messzyklen als einer Serie von Schrittfolgen mit einer zeitlichen Länge $T_Z$, $T'_Z$ bzw. einer zeitlichen Länge $T''_Z$,
- Serien von Messzyklen.

Jede Schrittfolge weist Sende- und Empfangsbereiche auf, die jeweils in Sendefenster und Empfangsfenster unterteilt sind. Die zeitliche Länge eines Sende- bzw. Empfangsfensters ist $T_{MU}$, $T'_{MU}$ bzw. $T''_{MU}$.

Es sei angemerkt, dass der Index n innerhalb einer der Schrittfolge die Stellung der Zeitfenster angibt und eine Dauer von $T_{SF}=n_{max}\cdot T_{MU}$ besitzt. Der Index besitzt einen Wertebereich n=0,1, ... (nmax-l), wobei sich nmax aus der konkreten Auslegung des Messzyklus bestimmt.

Der Index m gibt innerhalb des Messzyklus die Stellung der Schrittfolge an, wobei m=0,1,...(m_{max}-1). $m_{max}$ durch die konkrete Ausführung bestimmt wird und ist u.a. von der Anzahl der Frequenzen abhängig, für die die Übertragungsfunktion ermittelt werden soll. Eine Serie von Schrittfolgen wird als Messzyklus bezeichnet. Ein Messzyklus des Funkknoten F1 hat eine Länge von $T_Z=m_{max}\cdot T_{SF}$. Ein Messzyklus des Funkknoten F2 hat eine Länge von $T'_Z=m_{max}\cdot T'_{SF}$.usw.

Hinsichtlich der Phasenkohärenz wird angemerkt, dass die Sende- und die Empfangseinheit des Transponders zusammen mit dem Zeitgeber Z(t) und der Zeit-Frequenz Ablaufsteuerung eine phasenkohärente Domain bilden.

Die phasenkohärente Domain der Funkknoten ist für eine geforderte zeitliche Länge d.h. für eine beliebige Anzahl von Schritten, gekennzeichnet durch eine feste Beziehung zwischen der Phasenlage der Sendesignale $T_{FK}(m,n)$ für alle Indizes n innerhalb einer Schrittfolge, in denen die Sendeeinheit sendet und der Referenzphase für die Ermittlung der Empfangsvektoren $R_{FK}(m,n)$ für alle Indizes n innerhalb einer Schrittfolge, in denen die Empfangseinheit empfängt.

Ist die Phasenkohärenz auf eine Schrittfolge begrenzt, so beträgt die Kohärenz Länge $T_{SF}$ für den Funkknoten F1 bzw. $T'_{SF}$ für den Funkknoten F2 usw. Wird die Phasenkohärenz auf einen Messzyklus ausgedehnt, so ist für den Funkknoten F1 die Kohärenzlänge $T_Z$ bzw. für den Funkknoten F2 ist die Kohärenzlänge $T'_Z$ usw. Bei einer Serie von Messzyklen verlängert sich die Kohärenzlänge entsprechend auf die zeitliche Länge der Serie von Messzyklen.

Es versteht sich, dass die Übergangsbereiche, die durch Einschwingvorgänge gekennzeichnet sind, von der Forderung nach Kohärenz ausgenommen sind.

Aus den Anforderungen bzgl. Phasenkohärenz der jeweiligen Funkknoten ergibt sich eine Phasenkohärenz der Funkknoten zueinander, wenn sich die Zeitgeber nur in einem Zeitversatz unterscheiden und ansonsten beide Knoten dem gleichen zeitlichen Ablauf auf Basis $T_{MU}$, $T'_{MU}$ bzw. $T''_{MU}$ folgen und das Empfangs- und Sendeverhalten zueinander komplementär ist.

Die Empfangseinheiten RX de Funkknotens überführen die empfangenen Signale in eine zeitdiskrete Darstellung. Die Empfangsergebnisse $R_{F1}$, $R_{F2}$ und $R_{FE}$ werden weiterhin als Empfangsvektoren bezeichnet.

Die Empfangsvektoren $R_{FK}(m,n)$ haben die Form einer komplexen Zahl, wobei der Betrag proportional zum Betrag des empfangenen Signals ist und werden relative zu der jeweiligen Zeitbasis zu diskreten Zeitpunkten bestimmt, z.B. für F2 relativ zur Zeitbasis t' zu den Zeitpunkten $t'=n\cdot{}^*T'_{MU} + m\cdot T'_{SF}$ bestimmt.

Außerdem sind der Transponder FT dazu ausgelegt, aus dem Empfangssignal $R_{FK}$ mit Hilfe einer Funktion $F(R_{FK},..)$ einen Signalvektor VFK zu ermitteln und mittels der Datenschnittstelle DS-FK auszutauschen.

Für die entsprechenden Darstellung stelle die Abkürzung FK den Bezug zum jeweiligen Funkknoten her.

Um den ersten Modus des erfindungsgemäßen Verfahrens ausführen zu können, sind die Funkknoten zusätzlich dazu ausgelegt, den Signalvektor $V_{FK}$ an die Sendeeinheit TX zu übermitteln und mittels der Sendeeinheit TX weiter zu verarbeiten und darauf basierend das nächste Sendesignal zu erzeugen.

Die Zeit- und Frequenzsteuerung ZFS1 bzw. ZFS2 arbeitet auf Basis einer Zeiteinheit $T_{MU}$ und stellt sicher das alle relevanten Zustandswechsel (Sampling der Signalvektoren, RX/TX-TX/RX Übergänge, Frequenzwechsel fest mit der durch den jeweiligen Zeitgeber vorgegebenen Zeitbasis verbunden sind und auf diesen bezogen werden können.

Die Zeit- und Frequenzsteuerung ZFS der Funkknoten ist auch dafür verantwortlich, dass die Kohärenz zwischen den Signalen und Vektoren über die geforderte Länge erhalten bleibt, d.h. Einschwingvorgänge berücksichtigt und sich alle Funktionseinheiten auch in den Übergangsbereichen im linearen Regelbereichen befinden (u.a. Frequenzgenerator, PLL).

Dadurch erzeugt die Zeit- und Frequenzsteuerung ZFS jeweils eine phasenkohärente Domain PD, in der die Hochfrequenzsynthese, die Erzeugung der entsprechenden Sendevektoren und die Extraktion der Empfangsvektoren zueinander phasenseitig in einer festen Beziehung stehen.

Die Wiederholungen einer Schrittfolge bilden einen Messzyklus, wobei m mit jeder abgeschlossenen Schrittfolge inkrementiert und ωp entsprechende den Anforderungen ausgewählt wird. Im Falle eines Frequenz-Sweeps wird ωp mit jedem Messzyklus um $\omega_{step}$ erhöht.

Bei der Dimensionierung sind sowohl die jeweiligen Einschwingvorgänge als auch die Grenzen der durch die Grobsynchronisation erreichbaren maximalen Zeitoffsetschwankungen zu beachten und entsprechende die Schrittverzögerungs- bzw. Guard-Intervalle $T_{SV}$ auszulegen.

Anhand der ermittelten Signalvektoren erfolgt eine frequenz-diskrete Abtastung der Systemtransferfunktion. Diese erlauben eine getrennte Ermittlung von Zeit und Frequenzoffsets, wie auch der entsprechenden Kanaltransferfunktionen.

## 6 Zusammenfassung

Publizierte Ansätze für Relais-Angriffsstrategien auf frequenzbereichsbasierte Signalvektor-Messsysteme konzentrieren sich allein auf die Phasencharakteristik des direkten Pfades. Die vorgestellte Technologie, also das erfindungsgemäße Verfahren, bezieht aber die Eigenschaften der Mehrwege-Wellenausbreitung ein und ermöglicht es auf einfache Weise zusätzlich Rückschlüsse auf die Störenergieverteilung zu ziehen. In Verbindung mit funkknotenspezifischen Eigenschaften, wie dem Frequenzoffset, und Messablauf-bedingten zufälligen Parametern, wie dem Zeitoffset, entsteht ein erweiterter Satz von Merkmalen, die eine Umgebung eindeutig identifizieren.

Mit Hilfe von Plausibilitäts- und Integritätstests unter Einbeziehung von Machine-Learning Verfahren zur Klassifikation und Mustererkennung lassen sich dieser Merkmale zur sicheren umgebungsbasierten Authentifizierung nutzen und damit erfolgreich Relais-Angriff detektieren und abwehren.

Der Aufwand für eine Analyse und Modifikation der genutzten Signale zur Ausführung eines erfolgreichen Relais-Angriffs wird als sehr hoch und mit heutigen technischen Mitteln nicht umsetzbar eingeschätzt.

## Patentansprüche

1. Verfahren zur Prüfung der Zugehörigkeit von Funkknoten und von Objekten zu einer Funkumgebung mit einer Funkknotenmenge von wenigstens drei zueinander beabstandeten Funkknoten, wobei

   - jeder Funkknoten der Funkknotenmenge jeweils eine Funkschnittstelle und einen eigenen Zeitgeber aufweist,
   - zwischen den Zeitgebern der Funkknoten jeweils ein Zeitversatz besteht,
   - mindestens zwei Funkknoten der Funkknotenmenge Referenzfunkknoten sind, ein Abstand jedes Referenzfunkknotens zu den weiteren Referenzfunkknoten bekannt ist und die Referenzfunkknoten ein Referenzsystem mit einer Funkumgebung bilden,
   - mindestens einem Funkknoten der Funkknotenmenge ein Testfunkknoten ist und eine Zugehörigkeit des mindestens einen Testfunkknotens zu der Funkumgebung des Referenzsystems geprüft wird,
   - das Verfahren einen Messprozess, einen anschließenden Auswerteprozess und einen Vergleichsprozess umfasst,
   - während des Messprozesses von Funkknoten der Funkknotenmenge Signale gesendet und empfangen werden,
   - während des Messprozesses mindestens zwei Funkknoten der Funcknotenmenge als Transceiver arbeiten und mindestens ein Funkknoten während des Messprozesses ausschließlich als Transmitter oder ausschließlich als Receiver oder als Transceiver arbeitet,
   - der Auswerteprozess einen ersten Auswerteschritt und einen zweiten Auswerteschritt umfasst,
   - in dem ersten Auswerteschritt mittels empfangener Signale eine Systemübertragungsfunktion zwischen zwei Funkknoten der Funkknotenmenge und/oder ein Zeitoffset zwischen den Zeitgebern von zwei Funcknoten der Funkknotenmenge bestimmt wird,
   - in dem zweiten Auswerteschritt anhand der Systemübertragungsfunktion und/oder des Zeitoffsets aus dem ersten Auswerteschritt mindestens eine Abstandsinformation eines Objekts der Funkumgebung der beiden Funkknoten zu den beiden Funkknoten als ein Ergebnis bestimmt wird,
   - während des Auswerteprozesses in einem ersten Durchgang der erste Auswerteschritt und der zweite Auswerteschritt für mindestens ein Paar von Referenzfunkknoten mindestens einmal durchgeführt werden,
   - während des Auswerteprozesses in einem zweiten Durchgang der erste Auswerteschritt und der zweite Auswerteschritt für einen Testfuncknoten und einen Referenzfunkknoten mindestens einmal durchgeführt werden,
   - in dem Vergleichsprozess mindestens ein Ergebnis des ersten Durchgangs des Auswerteprozesses mit mindestens einem Ergebnis des zweiten Durchgangs des Auswerteprozesses verglichen wird und

- als Zugehörigkeit zu der Funkumgebung die Präsenz des Testfunkknotens innerhalb der Funkumgebung des Referenzsystems basierend auf mindestens einem Ergebnis des Vergleichsprozesses positiv oder negativ beschieden wird.

2. Verfahren nach Anspruch 1, **dadurch gekennzeichnet, dass** in dem zweiten Auswerteschritt anhand der Systemübertragungsfunktion und/oder des Zeitoffsets aus dem ersten Auswerteschritt mindestens eine Abstandsinformation der beiden Funkknoten zueinander bestimmt wird.

3. Verfahren nach Anspruch 1 oder 2, **dadurch gekennzeichnet, dass**

- der Messprozess mindestens zwei Messdurchgängen umfasst,
- in jedem Messdurchgang nacheinander von jedem Transceiver jeweils während eines Sendezeitraums ein Sendesignal mit einer Trägerfrequenz ausgesandt und das ausgesandte Sendesignal zumindest von den weiteren Transceivern während eines Empfangszeitraums empfangen wird,
- die Sendesignale der Transceiver zumindest während eines Messdurchgangs zueinander kohärent sind,
- sich die Trägerfrequenz jedes Messdurchgangs von den Trägerfrequenzen aller weiteren Messdurchgänge unterscheidet,
- sofern ein Funkknoten während des Messprozesses als Transmitter arbeitet der mindestens eine Transmitter jeweils während mindestens eines Zusatzsendezeitraums vor oder während oder nach einem der Messdurchgänge ein Sendsignal mit einer Trägerfrequenz aussendet, wobei das Sendesignal von den Transceivern empfangen wird.

4. Verfahren nach einem der vorangegangenen Ansprüche, **dadurch gekennzeichnet, dass** die Funkknotenmenge wenigstens vier Funkknoten umfasst und während des Messprozesses mindestens drei Funkknoten der Funkknotenmenge als Transceiver arbeiten.

5. Verfahren nach einem der vorangegangenen Ansprüche, **dadurch gekennzeichnet, dass** die Funkknotenmenge mindestens vier Funkknoten umfasst und während des Messprozesses mindestens zwei Funkknoten der Funkknotenmenge während des Messprozesses ausschließlich als Transmitter oder ausschließlich als Receiver oder als Transceiver arbeiten.

6. Verfahren nach einem der vorangegangenen Ansprüche, **dadurch gekennzeichnet, dass** die Funkknotenmenge mindestens vier Funkknoten umfasst und mindestens drei Funkknoten der Funkknotenmenge als Referenzfunkknoten das Referenzsystem bilden.

7. Verfahren nach einem der Ansprüche 3 bis 6, **dadurch gekennzeichnet, dass** innerhalb jedes Messdurchgangs das als zweites ausgesandte Sendesignal und jedes folgende Sendesignal zumindest aus einem Teil eines der während desselben Messdurchgangs empfangenen Signale gebildet wird.

8. Verfahren nach einem der Ansprüche 3 bis 7, **dadurch gekennzeichnet, dass** während des Messprozesses der Messdurchgang mehrfach wiederholt wird und die Trägerfrequenz der Sendesignale für jede Wiederholung jeweils einen vorbestimmten Wert innerhalb des Frequenzbereichs annimmt und die empfangenen Signale innerhalb eines Messfrequenzbereichs bestimmt werden.

9. Verfahren nach Anspruch 8, **dadurch gekennzeichnet, dass** jedes Sendesignal in dem Sendezeitraum eine Bandbreite aufweist, wobei die Bandbreite höchstens 1% des Messfrequenzbereichs beträgt.

10. Verfahren nach einem der vorangegangenen Ansprüche, **dadurch gekennzeichnet, dass** in dem Auswerteprozess sowohl in dem ersten Durchgang als auch in dem zweiten Durchgang zu mehreren Objekten jeweils eine Abstandsinformation bestimmt und die Abstandsinformationen aus dem erste Durchgang jeweils mit den entsprechenden Abstandsinformationen aus dem zweiten Durchgang verglichen werden.

11. Verfahren nach einem der vorangegangenen Ansprüche, **dadurch gekennzeichnet, dass** zumindest der Messprozess und der Auswerteprozess mehrfach wiederholt und mehrere Systemübertragungsfunktionen bestimmt werden, anhand der Ergebnisse der ersten Durchgänge ein erstes Bewegungsprofil mindestens eines Objekts oder des Testfunkknotens und anhand der Ergebnisse der zweiten Durchgänge ein zweites Bewegungsprofil des Objekt oder des Testfunkknotens ermittelt wird und in dem Vergleichsprozess das erste Bewegungsprofil mit dem zweiten Bewegungsprofil verglichen wird.

**12.** Verfahren nach einem der vorangegangenen Ansprüche, **dadurch gekennzeichnet, dass** ein erstes Bewegungsprofil des Testfunkknotens mittels eines Inertialsensors ermittelt wird und in dem Vergleichsprozess mit einem zweiten Bewegungsprofil verglichen wird, wobei das zweite Bewegungsprofil anhand der Ergebnisse mehrerer erster Durchgänge und/oder anhand der Ergebnisse mehrerer zweiter Durchgänge ermittelt wird.

**13.** Verfahren nach einem der vorangegangenen Ansprüche, **dadurch gekennzeichnet, dass** zumindest der Messprozess und der erste Durchgang des Auswerteprozesses mehrfach wiederholt und in dem Vergleichsprozess die Ergebnisse der mehreren ersten Durchgänge mit mindestens einem Ergebnis des zweiten Durchgangs verglichen werden.

**Claims**

**1.** Method of checking the association of radio nodes and objects with respect to a radio environment with a radio node number of at least three mutually spaced radio nodes, wherein

- each radio node of the radio node number has a respective radio interface and an individual time transmitter,
- a respective time offset is present between the time transmitters of the radio nodes,
- at least two radio nodes of the radio node number are reference radio nodes, a spacing of each reference radio node from the further reference radio nodes is known and the reference radio nodes form a reference system with a radio environment,
- at least one radio node of the radio node number is a test radio node and an association of the at least one test radio node with respect to the radio environment of the reference system is checked,
- the method comprises a measuring process, a subsequent evaluating process and a comparison process,
- during the measuring process signals are transmitted and received by radio nodes of the radio node amount,
- during the measuring process at least two radio nodes of the radio node number operate as transceivers and at least one radio node during the measuring process operates exclusively as a transmitter or exclusively as a receiver or as a transceiver,
- the evaluating process comprises a first evaluating step and a second evaluating step,
- in the first evaluating step a system transfer function between two radio nodes of the radio node number and/or a time offset between the time transmitters of two radio nodes of the radio node number is or are determined by means of received signals,
- in the second evaluating step at least one item of spacing information of an object of the radio environment of the two radio nodes from the two radio nodes is determined as a result on the basis of the system transfer function and/or the time offset from the first evaluating step,
- during the evaluating process in a first pass the first evaluating step and the second evaluating step for at least one pair of reference radio nodes are performed at least once,
- during the evaluating process in a second pass the first evaluating step and the second evaluating step for a test radio node and a reference radio node are performed at least once,
- in the comparison process at least one result of the first pass of the evaluating process is compared with at least one result of the second pass of the evaluating process and
- the presence of the test radio node within the radio environment of the reference system based on at least one result of the comparison process is positively or negatively given as association with respect to the radio environment.

**2.** Method according to claim 1, **characterised in that** in the second evaluating step at least one item of spacing information of the two radio nodes from one another is determined on the basis of the system transfer function and/or the time offset from the first evaluating step.

**3.** Method according to claim 1 or 2, **characterised in that**

- the measuring process comprises at least two measuring passes,
- in each measuring pass a transmitted signal with a carrier frequency is transmitted in succession by each transceiver respectively during a transmission time period and the transmitted transmission signal is received at least by the further transceivers during a reception time period,
- the transmission signals of the transceivers are coherent with respect to one another at least during a measuring pass,
- the carrier frequency of each measuring pass differs from the carrier frequencies of all further measuring passes,

- insofar as a radio node operates as a transmitter during the measuring process the at least one transmitter transmits a transmission signal with a carrier frequency respectively during at least one additional transmission time period before or during or after one of the measuring passes, wherein the transmission signal is received by the transceivers.

4. Method according to any one of the preceding claims, **characterised in that** the radio node number comprises at least four radio nodes and during the measuring process at least three radio nodes of the radio node number operate as transceivers.

5. Method according to any one of the preceding claims, **characterised in that** the radio node number comprises at least four radio nodes and during the measuring process at least two radio nodes of the radio node number operate during the measuring process exclusively as transmitters or exclusively as receivers or as transceivers.

6. Method according to any one of the preceding claims, **characterised in that** the radio node number comprises at least four radio nodes and at least three radio nodes of the radio node number as reference radio nodes form the reference system.

7. Method according to any one of claims 3 to 6, **characterised in that** within each measuring pass the transmission signal transmitted as second and each following transmission signal are formed at least from a part of one of the signals received during the same measuring pass.

8. Method according to any one of claims 3 to 7, **characterised in that** during the measuring process the measuring pass is repeated multiple times and the carrier frequency of the transmission signals adopts for each repetition a respective predetermined value within the frequency range and the received signals are determined within a measuring frequency range.

9. Method according to claim 8, **characterised in that** each transmission signal has a bandwidth in the transmission time period, wherein the bandwidth is at most 1% of the measuring frequency range.

10. Method according to any one of the preceding claims, **characterised in that** in the evaluating process a respective item of spacing information with respect to several objects is determined not only in the first pass, but also in the second pass and the items of spacing information from the first pass are respectively compared with the corresponding items of information from the second pass.

11. Method according to any one of the preceding claims, **characterised in that** at least the measuring process and the evaluating process are repeated multiple times and a plurality of system transfer functions is determined, a first movement profile of at least one object or of the test radio node is determined on the basis of the results of the first passes and a second movement profile of the object or of the test radio node is determined on the basis of the results of the second passes and the first movement profile is compared with the second movement profile in the comparison process.

12. Method according to any one of the preceding claims, **characterised in that** a first movement profile of the test radio node is determined by means of an inertial sensor and is compared in the comparison process with a second movement profile, wherein the second movement profile is determined on the basis of the results of a plurality of first passes and/or on the basis of the results of a plurality of second passes.

13. Method according to any one of the preceding claims, **characterised in that** at least the measuring process and the first pass of the evaluating process are repeated multiple times and in the comparison process the results of the plurality of first passes are compared with at least one result of the second pass.

## Revendications

1. Procédé pour vérifier l'appartenance de nœuds radio et d'objets à un environnement radio qui présente un ensemble de nœuds radio d'au moins trois nœuds radio espacés les uns des autres, dans lequel

- chaque nœud radio de l'ensemble de nœuds radio présente respectivement une interface radio et un temporisateur propre,

- respectivement un décalage temporel est présent entre les temporisateurs des nœuds radio,
- au moins deux nœuds radio de l'ensemble de nœuds radio sont des nœuds radio de référence, une distance de chaque nœud radio de référence par rapport aux autres nœuds radio de référence est connue et les nœuds radio de référence forment un système de référence avec un environnement radio,
- au moins un nœud radio de l'ensemble de nœuds radio est un nœud radio d'essai et une appartenance dudit au moins un nœud radio d'essai à l'environnement radio du système de référence est vérifiée,
- le procédé comprend un processus de mesure, un processus d'évaluation subséquent ainsi qu'un processus de comparaison,
- des signaux sont émis et reçus pendant le processus de mesure de nœuds radio de l'ensemble de nœuds radio,
- pendant le processus de mesure, au moins deux nœuds radio de l'ensemble de nœuds radio fonctionnent comme émetteurs-récepteurs et pendant le processus de mesure au moins un nœud radio fonctionne exclusivement comme transmetteur ou exclusivement comme récepteur ou comme émetteur-récepteur,
- le processus d'évaluation comprend une première étape d'évaluation et une seconde étape d'évaluation,
- lors de la première étape d'évaluation, une fonction de transmission système entre deux nœuds radio de l'ensemble de nœuds radio et/ou un décalage temporel entre les temporisateurs de deux nœuds radio de l'ensemble de nœuds radio est (sont) défini(es) à l'aide des signaux reçus,
- lors de la seconde étape d'évaluation, au moins une information de distance d'un objet de l'environnement radio des deux nœuds radio par rapport aux deux nœuds radio est définie comme un résultat sur la base de la fonction de transmission système et/ou du décalage temporel à la suite de la première étape d'évaluation,
- pendant le processus d'évaluation, lors d'une première phase, la première étape d'évaluation et la seconde étape d'évaluation sont exécutées au moins une fois pour au moins une paire de nœuds radio de référence,
- pendant le processus d'évaluation, lors d'une seconde phase, la première étape d'évaluation et la seconde étape d'évaluation sont exécutées au moins une fois pour un nœud radio d'essai et un nœud radio de référence,
- pendant le processus de comparaison, au moins un résultat de la première phase du processus d'évaluation est comparé à au moins un résultat de la seconde phase du processus d'évaluation, et
- la présence du nœud radio d'essai à l'intérieur de l'environnement radio du système de référence est décidée de façon positive ou de façon négative comme constituant une appartenance à l'environnement radio sur la base d'au moins un résultat du processus de comparaison.

2. Procédé selon la revendication 1, **caractérisé en ce que**, lors de la seconde étape d'évaluation, au moins une information de distance des deux nœuds radio l'un par rapport à l'autre est définie sur la base de la fonction de transmission système et/ou du décalage temporel à la suite de la première étape d'évaluation.

3. Procédé selon la revendication 1 ou 2, **caractérisé en ce que**

- le processus de mesure comprend au moins deux phases de mesure,
- lors de chaque phase de mesure, l'une après l'autre, un signal d'émission qui présente une fréquence porteuse est envoyé par chaque émetteur-récepteur respectivement pendant une période d'émission et le signal d'émission envoyé est reçu au moins par les autres émetteurs-récepteurs pendant une période de réception,
- les signaux d'émission des émetteurs-récepteurs sont cohérents les uns par rapport aux autres au moins pendant une phase de mesure,
- la fréquence porteuse de chaque phase de mesure se différencie des fréquences porteuses de la totalité des autres phases de mesure,
- dans la mesure où un nœud radio fonctionne comme transmetteur pendant le processus de mesure, ledit au moins un transmetteur envoie un signal d'émission qui présente une fréquence porteuse respectivement pendant au moins une période d'émission supplémentaire avant, pendant ou après l'une des phases de mesure, dans lequel le signal d'émission est reçu par les émetteurs-récepteurs.

4. Procédé selon l'une quelconque des revendications précédentes, **caractérisé en ce que** l'ensemble de nœuds radio comprend au moins quatre nœuds radio et, pendant le processus de mesure, au moins trois nœuds radio de l'ensemble de nœuds radio fonctionnent comme émetteurs-récepteurs.

5. Procédé selon l'une quelconque des revendications précédentes, **caractérisé en ce que** l'ensemble de nœuds radio comprend au moins quatre nœuds radio et, pendant le processus de mesure, au moins deux nœuds radio de l'ensemble de nœuds radio fonctionnent pendant le processus de mesure exclusivement comme transmetteur ou exclusivement comme récepteur ou comme émetteurs-récepteurs.

6. Procédé selon l'une quelconque des revendications précédentes, **caractérisé en ce que** l'ensemble de nœuds radio comprend au moins quatre nœuds radio et au moins trois nœuds radio de l'ensemble de nœuds radio forment le système de référence en tant que nœuds radio de référence.

7. Procédé selon l'une quelconque des revendications 3 à 6, **caractérisé en ce que**, à l'intérieur de chaque phase de mesure, le signal d'émission envoyé en deuxième lieu et chaque signal d'émission suivant est formé au moins d'une partie de l'un des signaux reçus pendant la phase de mesure de celui-ci.

8. Procédé selon l'une quelconque des revendications 3 à 7, **caractérisé en ce que**, pendant le processus de mesure, la phase de mesure est répétée plusieurs fois et la fréquence porteuse des signaux d'émission pour chaque répétition adopte une valeur prédéfinie à l'intérieur de la plage de fréquences et les signaux reçus sont définis à l'intérieur d'une plage de fréquences de mesure.

9. Procédé selon la revendication 8, **caractérisé en ce que** chaque signal d'émission présente dans la période d'émission une bande passante, dans lequel la bande passante atteint au maximum 1 % de la plage de fréquences de mesure.

10. Procédé selon l'une quelconque des revendications précédentes, **caractérisé en ce que**, pendant le processus d'évaluation, aussi bien dans la première phase que dans la seconde phase, respectivement une information de distance par rapport à plusieurs objets est définie et les informations de distance en provenance de la première phase sont comparées respectivement aux informations de distance correspondantes en provenance de la seconde phase.

11. Procédé selon l'une quelconque des revendications précédentes, **caractérisé en ce qu'**au moins le processus de mesure et le processus d'évaluation sont répétés plusieurs fois et plusieurs fonctions de transmission système sont définies, un premier profil de mouvement d'au moins un objet ou du nœud radio d'essai est déterminé sur la base des résultats des premières phases et un second profil de mouvement de l'objet ou du nœud radio d'essai est déterminé sur la base des résultats des secondes phases et le premier profil de mouvement est comparé au second profil de mouvement pendant le processus de comparaison.

12. Procédé selon l'une quelconque des revendications précédentes, **caractérisé en ce qu'**un premier profil de mouvement du nœud radio d'essai est déterminé au moyen d'un capteur inertiel et, pendant le processus de comparaison, est comparé à un second profil de mouvement, dans lequel le second profil de mouvement est déterminé sur la base des résultats de plusieurs premières phases et/ou sur la base des résultats de plusieurs secondes phases.

13. Procédé selon l'une quelconque des revendications précédentes, **caractérisé en ce qu'**au moins le processus de mesure et la première phase du processus d'évaluation sont répétés plusieurs fois et les résultats des plusieurs premières phases sont comparés à au moins un résultat de la seconde phase pendant le processus de comparaison.

Figur 1

Figur 2

**Figur 3**

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3243812 A
- DE 102009060505 B4
- DE 102009060593 A1
- DE 102009060592 B4
- DE 102009060591 A1
- US 20050228613 A1
- US 20140375420 A1

**In der Beschreibung aufgeführte Nicht-Patentliteratur**

- **A. R. S. C. HILDUR OLAFSDOTTIR.** On the Security of Carrier Phase-based Ranging. *Proceedings of Cryptographic Hardware and Embedded Systems (CHES) bekannt, https:// www.researchgate. net/ publication/254008732_Physical-layer_attacks_on_ chirp-based_ranging_ systems*

- **A. R. S. C. HILDUR OLAFSDOTTIR.** On the Security of Carrier Phase-based Ranging. *Proceedings of Cryptographic Hardware and Embedded Systems (CHES) dargestellt, https:// www.research-gate.net/publica-tion/254008732_Physical-layer_attacks_on_chirp-b ased_ranging_systems*
- **A. R. S. C. HILDUR OLAFSDOTTIR.** On the Security of Carrier Phase-based Ranging. *Proceedings of Cryptographic Hardware and Embedded Systems (CHES), https:// www.researchgate.net/publication/254008732_Physical-layer_attacks_on_chirp-b ased_ranging_systems*